(19) Europäisches Patentamt / European Patent Office / Office européen des brevets

(11) **EP 3 285 260 B1**

(12) **EUROPEAN PATENT SPECIFICATION**

(45) Date of publication and mention
of the grant of the patent:
**19.02.2020 Bulletin 2020/08**

(51) Int Cl.:
*G11B 20/12* (2006.01)      *G11B 27/32* (2006.01)
*H04N 21/432* (2011.01)      *H04N 7/01* (2006.01)
*G11B 20/10* (2006.01)      *H04N 5/85* (2006.01)

(21) Application number: **16779873.5**

(22) Date of filing: **22.03.2016**

(86) International application number:
**PCT/JP2016/058932**

(87) International publication number:
**WO 2016/167082 (20.10.2016 Gazette 2016/42)**

(54) **INFORMATION PROCESSING DEVICE, INFORMATION RECORDING MEDIUM, INFORMATION PROCESSING METHOD, AND PROGRAM**

INFORMATIONSVERARBEITUNGSVORRICHTUNG, INFORMATIONSAUFZEICHNUNGSMEDIUM, INFORMATIONSVERARBEITUNGSVERFAHREN UND PROGRAMM

DISPOSITIF DE TRAITEMENT D'INFORMATIONS, SUPPORT D'ENREGISTREMENT D'INFORMATIONS, PROCÉDÉ DE TRAITEMENT D'INFORMATIONS ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2015   JP 2015083072**

(43) Date of publication of application:
**21.02.2018   Bulletin 2018/08**

(73) Proprietor: **Sony Corporation**
**Tokyo 108-0075 (JP)**

(72) Inventors:
• **TAKAHASHI, Ryohei**
  **Minato-Ku**
  **Tokyo 108-0075 (JP)**
• **UCHIMURA, Kouichi**
  **Minato-Ku**
  **Tokyo 108-0075 (JP)**

(74) Representative: **Witte, Weller & Partner Patentanwälte mbB**
**Postfach 10 54 62**
**70047 Stuttgart (DE)**

(56) References cited:
WO-A1-2012/147350      WO-A1-2012/147365
WO-A1-2016/038811      JP-A- 2007 104 615
JP-A- 2012 130 032      US-A1- 2014 056 577
US-A1- 2015 296 232

# EP 3 285 260 B1

**Description**

[Technical Field]

The present disclosure relates to an information processing device, an information recording medium, an information processing method, and a program. More particularly, the present disclosure relates to an information processing device, an information recording medium, an information processing method, and a program applied to processes such as the playback and recording of high dynamic range (HDR) video having an expanded gamut and contrast ratio.

[Background Art]

Digital versatile discs (DVDs) and Blu-ray (registered trademark) discs (BDs) are widely used as information recording media for recording a variety of content, such as movies and music.

On a Blu-ray disc read-only memory (BD-ROM), a medium on which content such as a movie is prerecorded, data such as audio and subtitles are recorded in conjunction with high-definition (HD) images, for example.
Current BD-ROMs primarily store HD images, also referred to as HD-compatible 2K images, but image quality is expected to improve in the future, and media storing ultra-high-definition (UHD) 4K images are expected to increase.
Note that processes of recording and playing back data using BD as well as 4K images are described in PTL 1 (JP 2011-023071A), for example.

The standardization of data recording and playback formats of ultra-high-definition (UHD) video with respect to BD is being advanced in various ways by multiple standards developing organizations, such as the Blu-ray (registered trademark) Disc Association (BDA) and the Society of Motion Picture and Television Engineers (SMPTE) .

Specifically, the standards developing organizations are currently settling upon standards that take into account not only support for 4K video, but also support for high dynamic range (HDR) video, in which the gamut and contrast ratio of the video to output to a display are expanded.

Compared to the standard dynamic range (SDR) video widely being used in current 2K-capable displays, HDR video features a wider expressible gamut and also allows for a larger contrast ratio to be configured, enabling video representation that is close to the reality seen with the naked eye.

The UHD-BD standard, a Blu-ray (registered trademark) disc (BD) standard related to a form of HDR video called ultra-high-definition (UHD) video, is currently in the planning stages, and different types of HDR content to be played back according to multiple different methods are being accepted.

However, at present, much of the specific data recording methods and playback methods for these multiple types of HDR content are still undecided.

[Citation List]

[Patent Literature]

[PTL 1] Japanese Patent Laid-Open No. 2011-023071

WO2012147350 defines enhancement layer for greater color bit depth (10 bit). The Problem is to Save Disk space and prepare for future additional data. The solution is that in a BD, the Base Layer and Enhancement Layer are played together to obtain an HDR movie in original quality, using a "pixel shift amount b", transmitted together with the enhancement layer, to calculate the HDR color bit depth (10 bit) from the (8 bit) base layer color bit depth.

[Summary]

[Technical Problem]

It is an object of the present disclosure to provide an information processing device, an information recording medium, an information processing method, and a program enabling the reliable execution of recording and playback processes for various different types of HDR video.

[Technical Solution]

The invention is as defined by the appended claims.

Note that the program according to the present disclosure is a program that can be provided in a storage medium or communication medium that is provided in a computer-readable form for an information processing device

2

or a computer system that is capable of executing various types of program code, for example. Providing this sort of program in a computer-readable form makes it possible to implement the processing according to the program in the information processing device or the computer system.

The object, features, and advantages of the present disclosure will be made clear later by a more detailed explanation that is based on the embodiments of the present disclosure and the appended drawings. Furthermore, the system in this specification is not limited to being a configuration that logically aggregates a plurality of devices, all of which are contained within the same housing.

[Advantageous Effects of Invention]

According to an embodiment of the present disclosure, there is realized a configuration enabling the acquisition of video information about multiple sets of video data to apply to ultra-high-definition (UHD) video playback, and video playback applying the multiple sets of video data.

Specifically, video information about multiple sets of video data to apply to ultra-high-definition video playback is recorded in a stream number (STN) table in units of play items registered in a playlist file. For example, by recording video information regarding Blu-ray disc movie (BDMV) HDR video data (primary video stream) and video information regarding enhancement layer video data (enhancement layer (EL) video stream) in the STN table in units of play items, during playback it is possible to execute reliable decoding and playback processes based on the video information regarding these two sets of video data.

According to this configuration, there is realized a configuration enabling the acquisition of video information about multiple sets of video data to apply to ultra-high-definition (UHD) video playback, and video playback applying the multiple sets of video data.

Note that the advantageous effects described in this specification are merely for the sake of example and nonlimiting, and there may be additional advantageous effects.

[Brief Description of Drawings]

[FIG. 1]

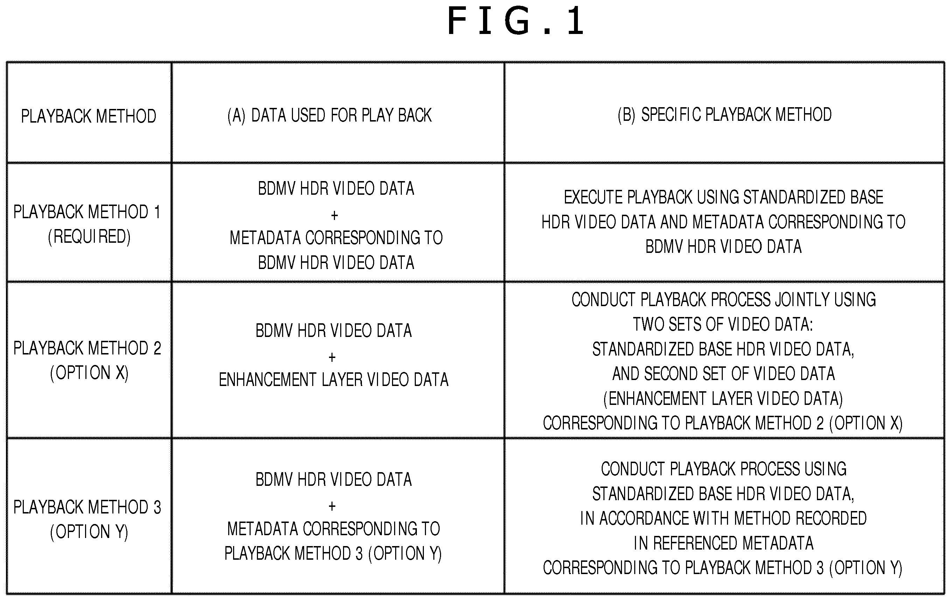

FIG 1 is a diagram explaining playback methods for ultra-high-definition (UHD) video.
[FIG. 2]

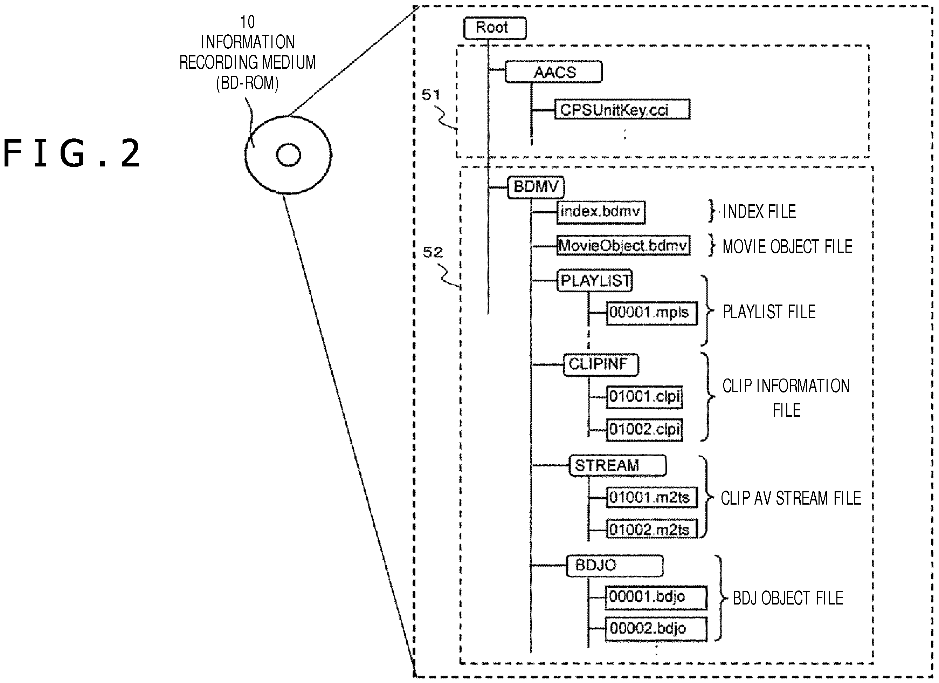

FIG. 2 is a diagram explaining an example directory structure of data recorded onto a medium according to the BDMV format.
[FIG. 3]

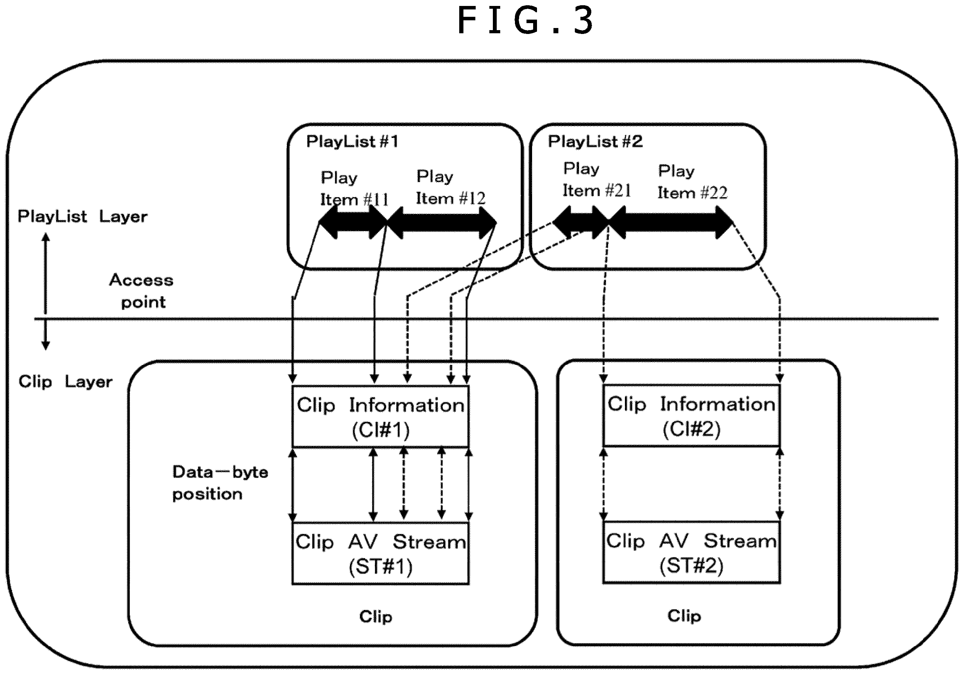

FIG. 3 is a diagram explaining correspondences between playlists prescribed in the BDMV format, and playback data.
[FIG. 4]

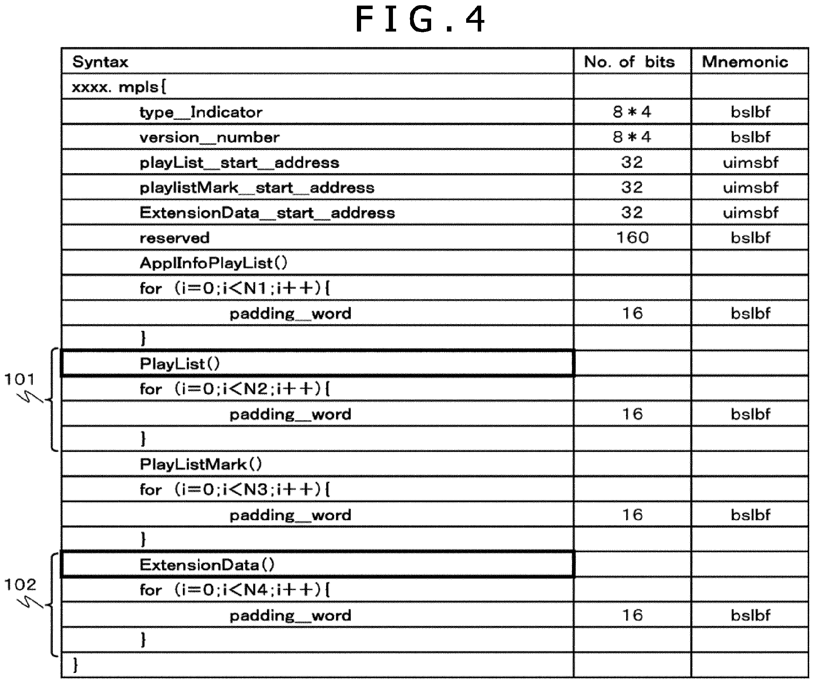

FIG. 4 is a diagram explaining an example data structure of a playlist file.
[FIG. 5]

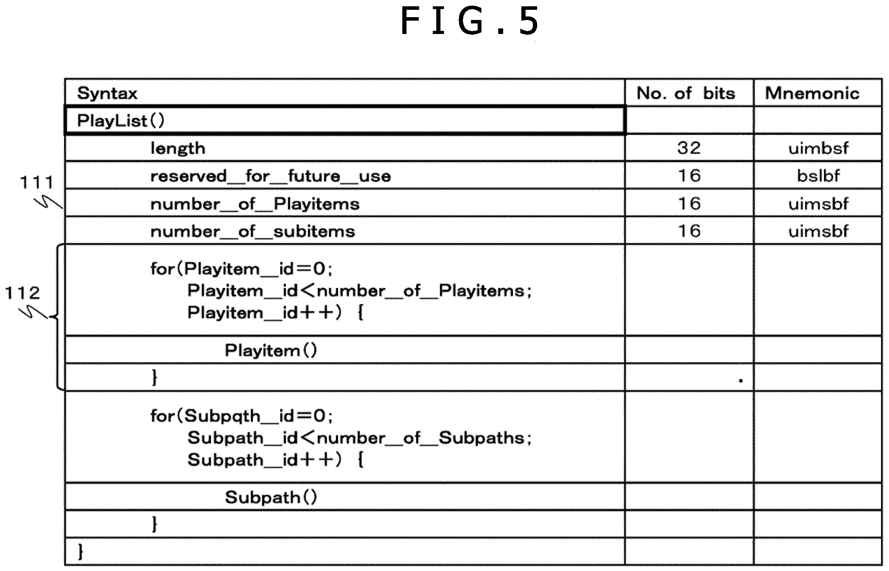

FIG. 5 is a diagram illustrating a detailed structure of a playback stream information recording area [PlayList()] in a playlist file.
[FIG. 6]

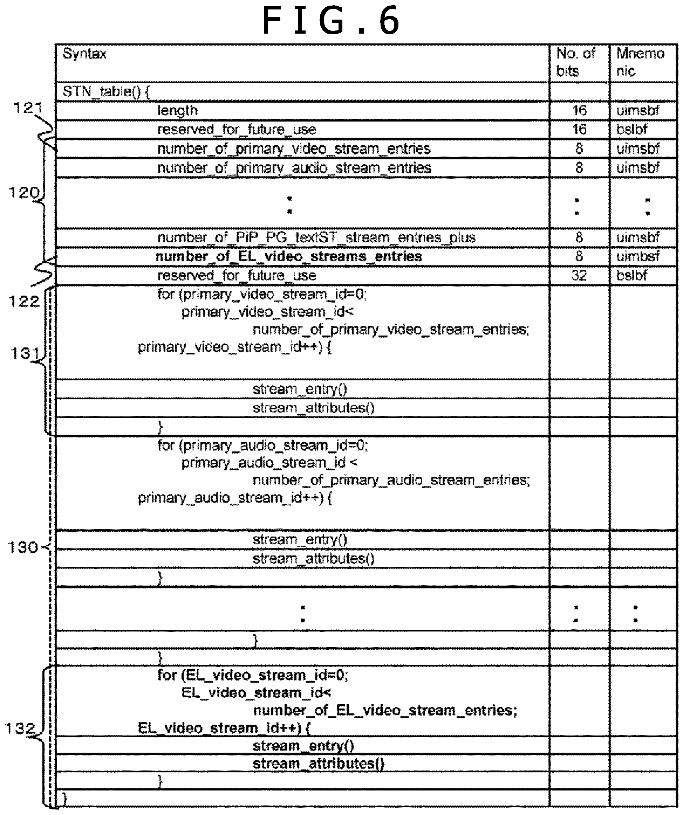

FIG. 6 is a diagram illustrating a detailed configuration example of a stream number table (STN table) in units of play items.
[FIG. 7]

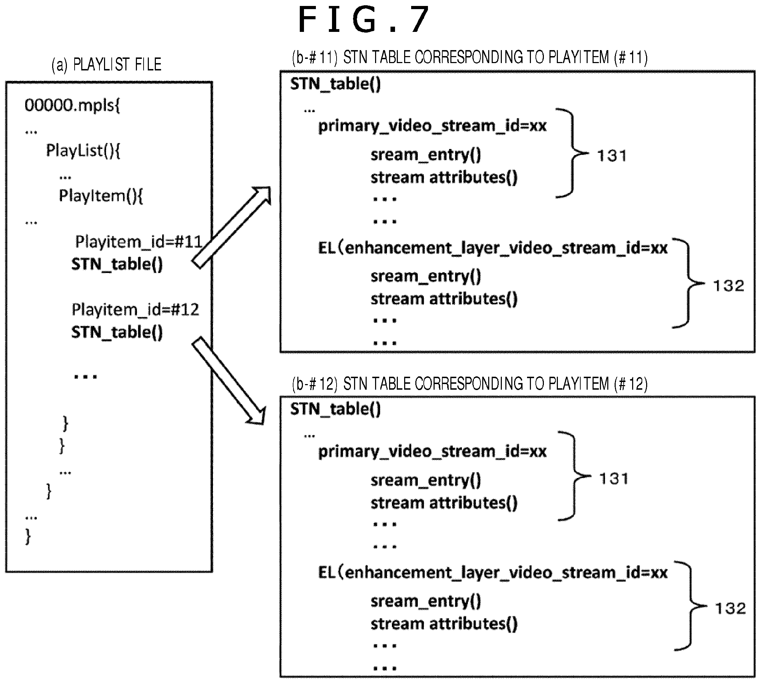

FIG. 7 is a diagram illustrating a simplification of recorded information in a playlist file.
[FIG. 8]

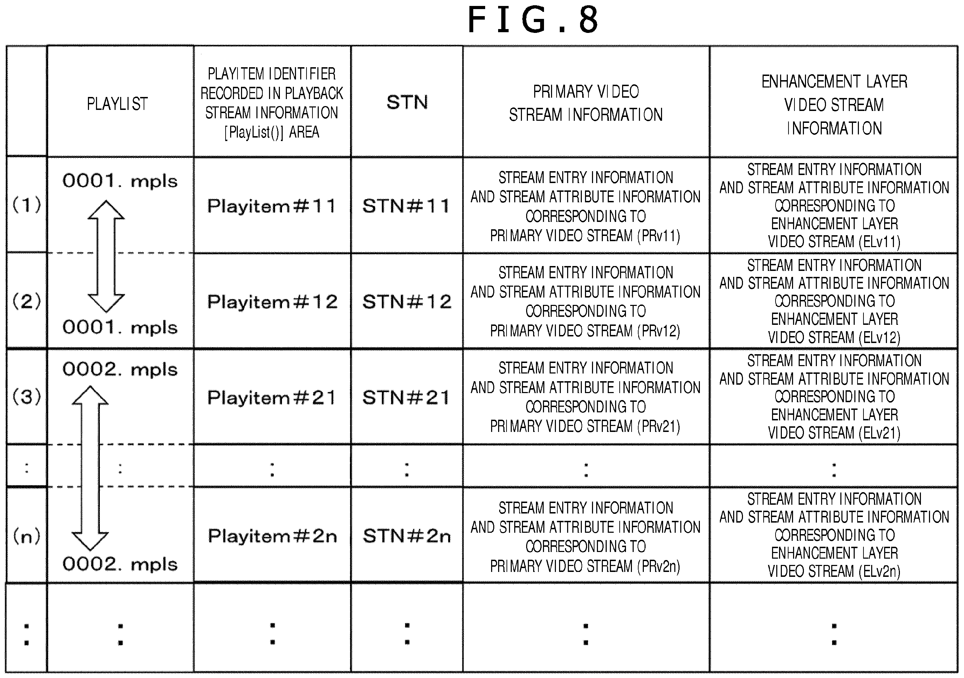

FIG. 8 illustrates correspondence relationships among recorded information in PlayLists recorded on disc.
[FIG. 9]

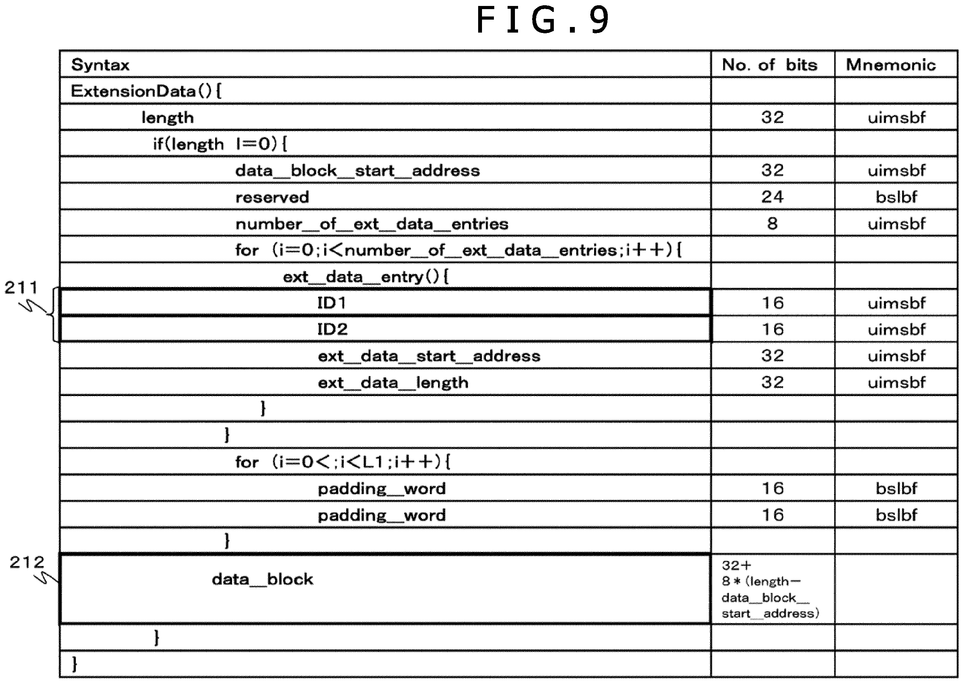

FIG. 9 is a diagram explaining an example data structure of an extension data recording area [ExtensionData()] of a playlist file.
[FIG. 10]

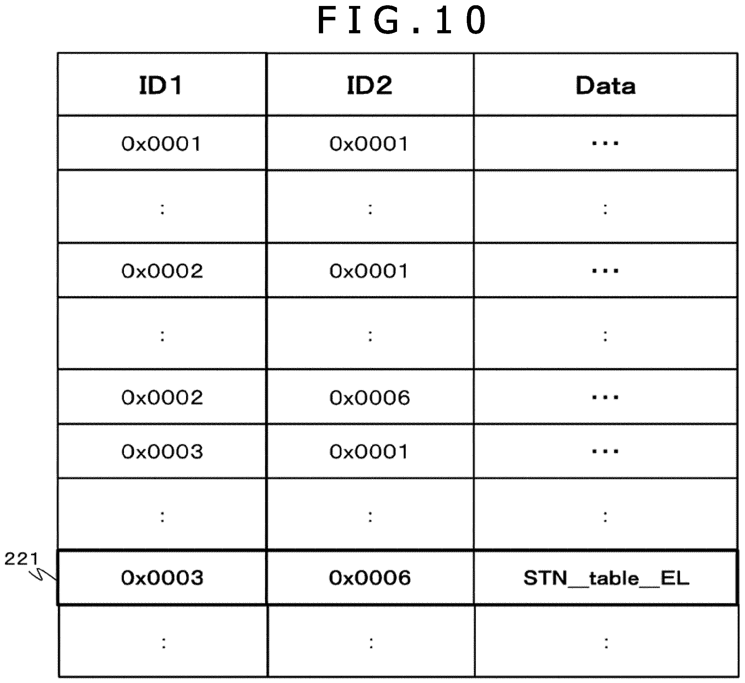

FIG. 10 is a diagram explaining identification information indicating the type of extension data to record in an extension data recording area [ExtensionData()].
[FIG. 11]

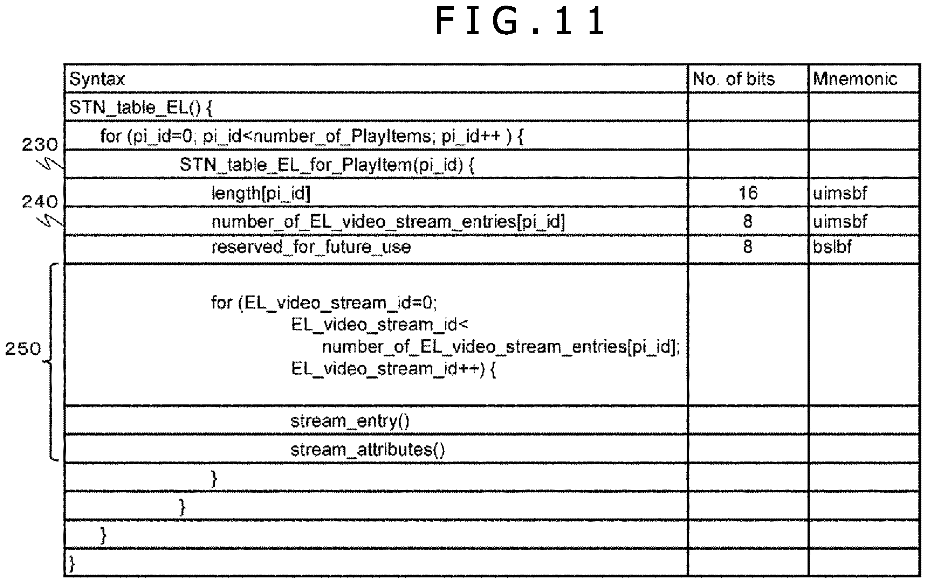

FIG 11 is a diagram explaining an example data structure of an STN table [STN_table] recorded in an extension data recording area [ExtensionData()] of a playlist file.
[FIG. 12]

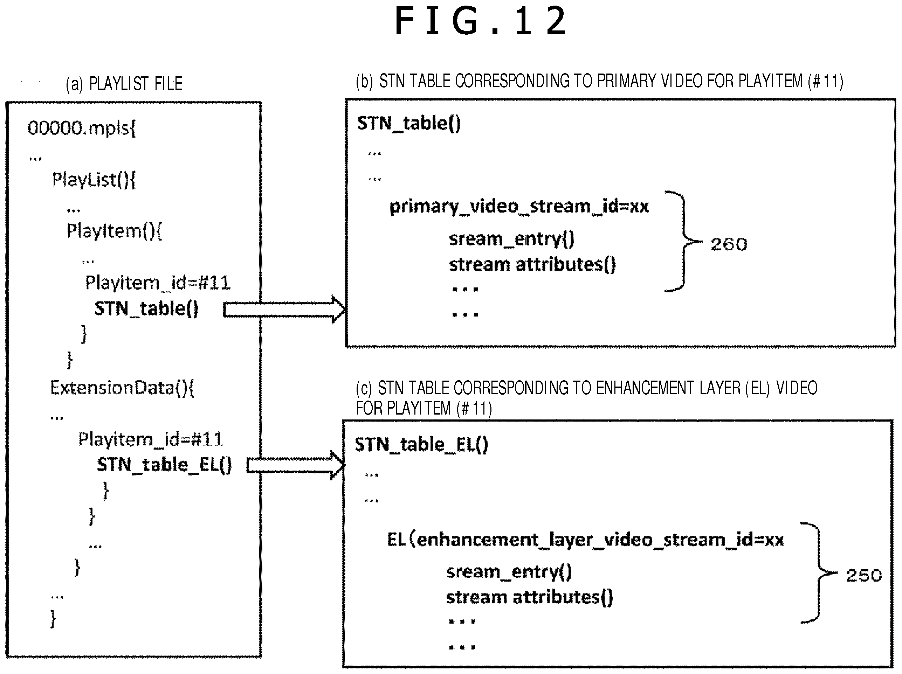

FIG. 12 is a diagram illustrating a simplification of recorded information in a playlist file.
[FIG. 13]

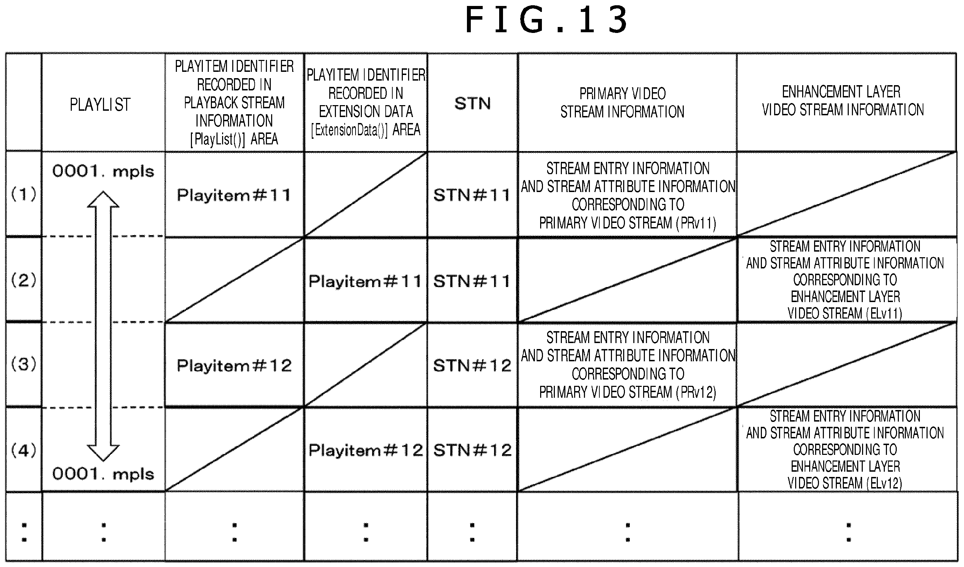

FIG. 13 illustrates correspondence relationships among recorded information in playlists recorded onto a disc.
[FIG. 14]

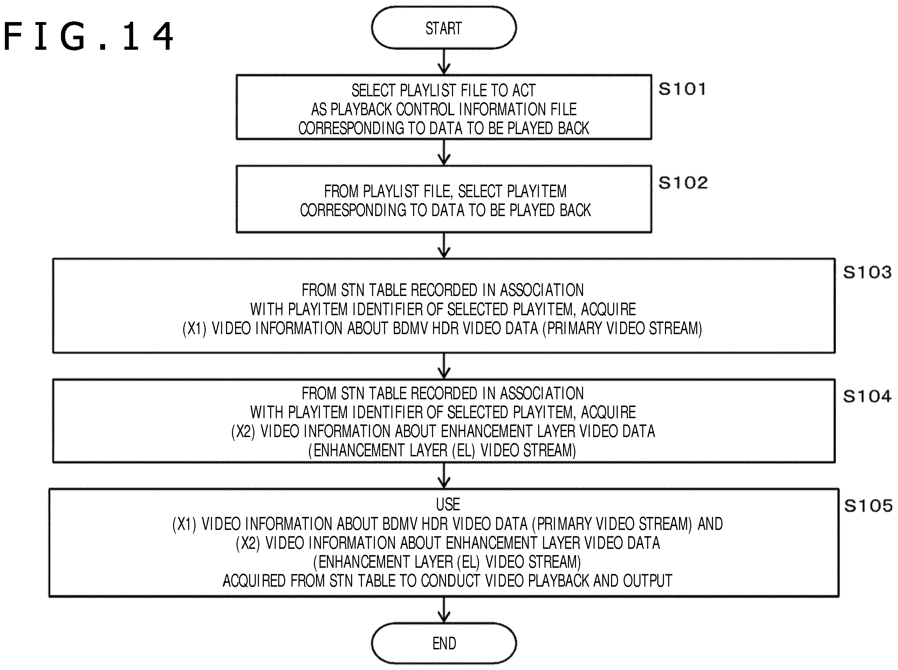

FIG. 14 is a diagram illustrating a flowchart explaining a playback sequence by an information processing device (playback device) that conducts data playback using a playlist file.
[FIG. 15]

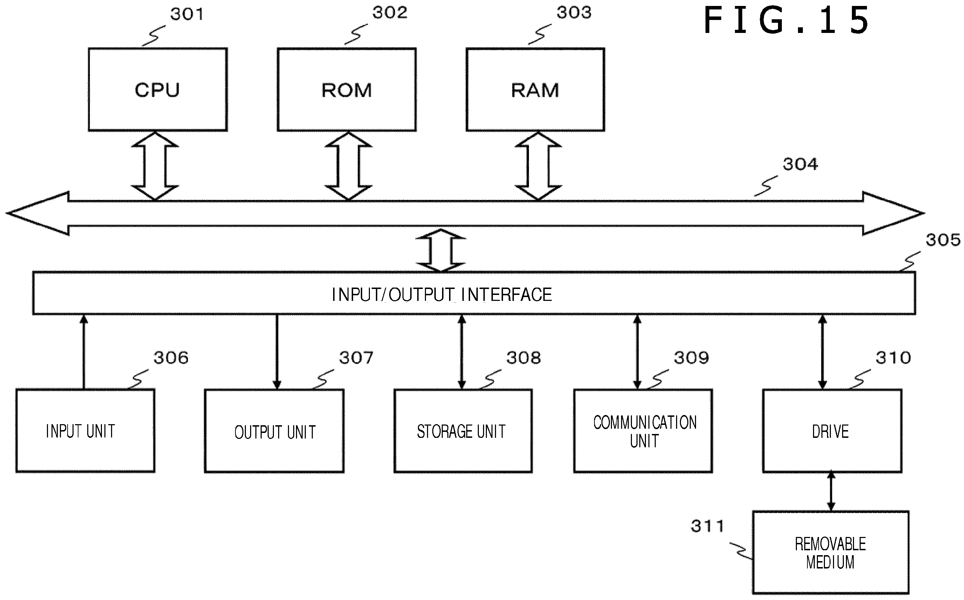

FIG. 15 is a diagram explaining an example hardware configuration of an information processing device to which is applied a process according to an embodiment of the present disclosure.

[Description of Embodiments]

Hereinafter, an information processing device, information recording medium, information processing method, and program according to an embodiment of the present disclosure will be described in detail and with reference to the drawings. Hereinafter, the description will proceed according to the following items.

1. Overview of structure of content recorded to disc and content playback processes
2. Overview of data recording structure on disc and playback process
3. Embodiments recording video information for two video streams to playlist file

3-1. (Embodiment 1) Embodiment that records information about two video streams to STN table in units of play items recorded in playback stream information recording area set in playlist file
3-2. (Embodiment 2) Embodiment that records information about enhancement layer video data (EL video stream) in units of play items in extension data recording area set in playlist file

4. Playback sequence by information processing device (playback device)
5. Process of generating data to record onto medium (authoring), and data recording process
6. Application to other data playback methods
7. Example configuration of information processing device
8. Conclusion of configuration of present disclosure

1. Overview of structure of content recorded to disc and content playback processes

First, an overview of the structure of content recorded to disc and content playback processes will be described. As described earlier, the standardization of data recording structures and playback formats of ultra-high-definition (UHD) video with respect to Blu-ray (registered trademark) Disc (BD) is being advanced by multiple standards developing organizations, such as the Blu-ray (registered trademark) Disc Association (BDA) and the Society of Motion Picture and Television Engineers (SMPTE) .
Note that ultra-high-definition (UHD) video is one mode of high dynamic range (HDR) video.
Compared to the standard dynamic range (SDR) video widely being used in current 2K-capable displays, HDR video features a wider expressible gamut and also allows for a larger contrast ratio to be configured, enabling video representation that is close to the reality seen with the naked eye.
Specifically, HDR video enables the output of video having a contrast ratio exceeding 100,000:1, enabling the clear recreation of dark areas and bright areas without producing phenomena such as crushed blacks or blown-out highlights.
The UHD-BD standard related to methods such as the format of recording ultra-high-definition (UHD) video onto BD is currently in the planning stages, and multiple different playback methods are expected to be standardized. Specific types of content playback methods expected to be standardized will now be described with reference to FIG. 1.
FIG. 1 is a diagram illustrating a list describing the items

(A) data used for playback, and
(B) specific playback method for three different playback methods 1 to 3.

In playback method 1,

(A) the data used for playback is BDMV HDR video data, and metadata corresponding to the BDMV HDR video data, and
(B) the specific playback method is to execute playback using only standardized base HDR video data and metadata corresponding to the BDMV HDR video data.

Playback method 1 is a required configuration, and BDMV HDR video data is required to be recorded on standards-compliant discs.

Also, for a standards-compliant player (playback device), the ability to execute a playback process according to playback method 1 is a requirement.

In Playback method 2 (option X),

(A) the data used for playback is BDMV HDR video data, and enhancement layer video data, and
(B) the specific playback method is to execute playback by jointly using two sets of video data: standardized base HDR video data, and a second set of video data (enhancement layer video data) corresponding to playback method 2 (option X).

Playback method 2 is optional, and it is acceptable for enhancement layer video data to be additionally recorded to a standards-compliant disc on which BDMV HDR video data is recorded.

Also, some standards-compliant players, namely, players (playback devices) capable of executing playback method 2 (option X), are capable of executing a playback process according to playback method 2.

In playback method 3 (option Y),

(A) the data used for playback is BDMV HDR video data, and metadata corresponding to playback method 3 (option Y), and
(B) the specific playback method is to execute a playback process using the standardized base HDR video data, according to a method recorded in the metadata corresponding to playback method 3 (option Y).

Playback method 3 is optional, and it is acceptable for metadata corresponding to playback method 3 (option Y) to be additionally recorded to a standards-compliant disc on which BDMV HDR video data is recorded.

Also, some standards-compliant players, namely, players (playback devices) capable of executing playback method 3 (option Y), are capable of executing a playback process according to playback method 3.

Playback method 1 is a required HDR content playback method applied to all HDR content recorded onto standards-compliant discs. All standards-compliant players are capable of playback according to playback method 1.

In contrast, playback methods 2 and 3 are optional methods of conducting a playback process by using enhancement video data or metadata that is additionally recorded onto standards-compliant discs.

Among these playback methods, playback method 2 (option X) is a playback method involving a playback process that utilizes the following two sets of video data (video streams) in parallel:

(X1) BDMV HDR video data, and
(X2) enhancement layer video data.

When a playback device (player) that executes a playback process according to playback method 2 conducts a playback process on a certain segment of content, for example, the playback device (player) selects (X1) BDMV HDR video data corresponding to the target segment for playback, additionally selects (X2) enhancement layer video data of a segment corresponding to the selected segment, and executes various processes on the two selected sets of video data, such as a decoding process, for example, to thereby play back the video data.

The following two sets of video data (video streams) used in playback method 2 (option X), namely,

(X1) BDMV HDR video data, and
(X2) enhancement layer video data, possibly may be played back by being selected in units of user-designated playback segments.

Consequently, the playback device conducts a playback process after first acquiring information required for the playback process, such as the correspondence relationship between these two sets of video data in each playback segment, and codec (decoding) information for the two sets of video data.

Currently, however, a specific configuration for the mode of recording and the mode of acquiring the correspondence relationship between the two sets of video data and video information for each video has yet to be prescribed or even proposed.

The configuration of the present disclosure described in the following proposes a specific configuration for recording information required for the playback process and also acquiring such information during the playback process, the information being information such as the correspondence relationship between the following two sets of video data (video streams) used in playback method 2 (option X), namely,

(X1) BDMV HDR video data, and
(X2) enhancement layer video data, and codec (decoding) information for the two sets of video data.

2. Overview of data recording structure on disc and playback process

Before describing a specific configuration enabling the acquisition of the correspondence relationship between two sets of video data and video information used in playback method 2. (option X) discussed above, an overview of a typical data recording structure on disc and a playback process will be given.

The following describes, as an example of a data recording structure on disc and a playback process, the recording format in the case of recording content, such as a movie, for example, onto a Blu-ray (registered trademark) Disc (BD) (referred to as the Blu-ray (registered trademark) Disc Movie (BDMV) format), and an example playback process for the same.
In the BDMV format, data to be played back, such as video, audio, and subtitles, is stored in a Clip audio visual (AV) Stream file and recorded.

A Clip AV Stream file is a file in which 188-byte transport stream (TS) packets are set as structural elements. The transport stream packets, or TS packets, are arranged according to the Moving Picture Experts Group (MPEG)-2 Transport Stream (TS) format.
The MPEG-2 TS format is standardized in International Organization for Standardization (ISO) 13818-1, and is used for data recording onto Blu-ray (registered trademark) Discs (BDs), digital broadcasting, and the like, for example.

Note that the allowable encoded data of video, audio, and still images which may be stored according to the MPEG-2 TS format includes the following encoded data, for example.

Video: MPEG-1, MPEG-2, advanced video coding (AVC) (MPEG-4AVC), high efficiency video coding (HEVC) (MPEG-4 HEVC)
Audio: MPEG-1 audio layer-1 (MP1), MPEG-1 audio layer-2 (MP2), MPEG-1 audio layer-3 (MP3), linear pulse code modulation (PCM), digital theater systems (DTS)
Still images: Joint Photographic Experts Group (JPEG)

For example, each of the above types of encoded data is stored by being broken up into transport stream (TS) packets prescribed in MPEG-2 TS.

FIG. 2 is a diagram illustrating a directory of recorded data conforming to the BDMV format, recorded onto an information recording medium 10, which is a ROM-type Blu-ray (registered trademark) Disc (BD), for example.

The directory is separated into a management information configuration section 51 (advanced access content system (AACS) directory) and a data section 52 (BDMV directory), as illustrated in FIG. 2.
In the management information configuration section 51 (AACS directory), information such as a citrix presentation server (CPS) unit key file, which is the encryption key of the data, and a usage control information file are stored.

In the CPS unit key file, a CPS unit key to apply to the decryption of encrypted data, that is, the data to be played back that is stored in the Clip AV Stream file, is stored as encryption key data.
The playback device acquires the CPS unit key from the CPS unit key file by a process applying a device key stored in the playback device and data stored on the disc, and applies the acquired CPS unit key to decrypt the encrypted data stored in the Clip AV Stream file and conduct a playback process.

Meanwhile, in the BDMV directory and below in the data section 52, files such as

an index file,
PlayList files,
Clip Information files,
Clip AV Stream files, and
BDJO files
are recorded, for example.

In the index file, title information which is treated as index information to apply to the playback process is stored.
A PlayList file is a file prescribing parameters such as a playback order of content according to the program information of a playback program designated by the title, and includes information such as information designating Clip Information files in which playback position information and the like is recorded, for example.
A Clip Information file is a file designated by a PlayList file, and includes information such as playback position information for a Clip AV Stream file.
A Clip AV Stream file is a file storing AV stream data to be played back.
A BDJO file is a file storing execution control information for files storing Java (registered trademark) programs, commands, and the like.

The sequence by which an information processing device plays back content recorded on an information recording medium is as follows.

(a) First, a specific title is designated from the index file by the playback application.
(b) The playback program associated with the designated title is selected.
(c) A PlayList prescribing the content playback order and the like is selected according to the program information of the selected playback program.
(d) An AV stream or command is read out as actual content data by the Clip Information prescribed by the selected PlayList, and a process of playing back the AV stream or executing the command is conducted.

FIG. 3 is a diagram explaining the correspondence relationships among data recorded onto an information recording medium 10, namely,

PlayList files,
Clip Information files, and
Clip AV Stream files.

The AV streams made up of certain images and audio data which are the actual data to be played back are recorded as Clip AV Stream files. Furthermore, PlayList files and Clip Information files are prescribed as management information and playback control information files for these AV streams.

As illustrated in FIG. 3, these multiple categories of files may be categorized into the following two layers of a PlayList Layer that includes PlayList files, and a Clip Layer made up of Clip AV Stream files and Clip Information files.

Note that one Clip Information file is associated with one Clip AV Stream file. A pair of these files is considered to be an Object, and these are collectively called a Clip, or a Clip file.

Management information, such as an entry point (EP) map recording detailed information about the data included in a Clip AV Stream file, such as information about I picture positions in MPEG data, for example, is recorded in the Clip Information file.

The Clip AV Stream file stores data mapping the MPEG-2 Transport Stream (TS) according to the prescribed structure of the BDMV format.

In addition, the Clip Information file stores management information for acquiring information such as the playback start position of stored data in a Clip AV Stream file, such as correspondence data between data positions of byte sequence data in a Clip AV Stream file and playback time positions such as entry points (EPs), which are playback start points when the data is unpacked along the time axis, for example.

A PlayList includes information in which access points corresponding to playback start positions and playback end positions are indicated with time stamps, which is information along the time axis.

For example, it is possible to reference the Clip Information file on the basis of a time stamp indicating an elapsed playback time position from the start point of the content, and thereby acquire the data readout position of the Clip AV Stream file, or in other words, an address to use as the playback start point.

The Clip Information file is used to find, from the time stamp, the address information at which to start decoding the stream in the Clip AV Stream file.

In this way, a PlayList file includes playback segment designation information with respect to data available for playback included in the Clip Layer (that is, Clip Information files and Clip AV Stream files).

In a PlayList file, one or more PlayItems are configured, and each PlayItem includes playback segment designation information with respect to data available for playback included in the Clip Layer (that is, Clip Information files and Clip AV Stream files).

3. Embodiments recording video information for two video streams to playlist file

As described earlier with reference to FIG. 1, the UHD-BD standard related to methods such as the format of recording ultra-high-definition (UHD) video onto BD is currently in the planning stages, and methods of recording and playing back different types of HDR content to be played back according to multiple different playback methods are expected to be standardized.

Specific content playback methods expected to be standardized include three different playback methods 1 to 3, as described earlier with reference to FIG. 1. Among these playback methods, playback method 2 (option X) involves a playback process that utilizes the following two sets of video data (video streams) in parallel:

(X1) BDMV HDR video data, and

(X2) enhancement layer video data.

When a playback device (player) that executes a playback process according to playback method 2 conducts a playback process on a certain segment of content, for example, the playback device (player) selects

(X1) BDMV HDR video data corresponding to the target segment for playback, and
(X2) enhancement layer video data, and executes various processes on the two selected sets of video data to thereby play back the video data.

To conduct such a playback process, the playback device acquires information related to

(X1) BDMV HDR video data, and
(X2) enhancement layer video data which are used in playback method 2 (option X).

Specifically, the playback process is conducted after first ascertaining the correspondence relationship in units of playback segments for these two sets of video data (video streams), and in addition, acquiring information required for playback, such as the codec (decoding) for each set of video data.
Hereinafter, embodiments will be described in which correspondence relationship information and video information for these two sets of video data (video streams), namely,

(X1) BDMV HDR video data, and
(X2) enhancement layer video data are recorded in the PlayList file.

The two embodiments indicated below will be described in order.

(Embodiment 1) Embodiment that records information about two video streams to STN table in units of PlayItems set in PlayList file
(Embodiment 2) Embodiment that records information about enhancement layer video data (EL video stream) in extension data recording area set in PlayList file

As described earlier with reference to FIGS. 2 and 3, a PlayList file is a file storing playback control information such as a playback order of content, and includes various playback control information such as designation information for a Clip Information file in which playback position information and the like is recorded.
FIG. 4 illustrates syntax indicating the data structure of a PlayList file.
As illustrated in FIG. 4, in a PlayList file, type information [type_indicator] indicating the file type is recorded, start address information from [PlayList_start_address] to [ExtensionData_start_address] of each data object is recorded after that, and a recording area for data objects recorded in the PlayList file is provided after that.
In the data object recording area, the following areas are provided.

(1) [AppInfoPlayList()], a playback control parameter storage area storing information such as playback control parameters
(2) [PlayList()], a playback stream information recording area recording information such as stream information for data to be played back in units of PlayItems included in the PlayList
(3) [PlayListMark()], a mark information recording area recording information such as playback start position information such as entry marks used for features such as chapter search, for example
(4) [ExtensionData()], an extension data recording area in which various extension data may be recorded

Embodiments will be described in which the PlayList file includes recorded data from which the correspondence relationship and video information for the following two sets of video data (video streams) used in playback method 2 (option X) discussed above, namely,

(X1) BDMV HDR video data (primary video stream), and
(X2) enhancement layer video data (enhancement layer (EL) video stream) may be ascertained.

The following two examples will be described in order as the embodiments.

(Embodiment 1) Embodiment that records information about two video streams to STN table in units of PlayItems recorded in playback stream information recording area set in PlayList file

(Embodiment 2) Embodiment that records information about enhancement layer video data (EL video stream) in units of PlayItems in extension data recording area set in PlayList file

3-1. (Embodiment 1) Embodiment that records information about two video streams to STN table in units of play items recorded in playback stream information recording area set in playlist file

First, an embodiment that records information about two video streams to STN table in units of PlayItems recorded in playback stream information recording area set in PlayList file will be described as Embodiment 1.

As described earlier with reference to FIG. 4, the following four data object recording areas are provided in a PlayList file.

(1) [AppInfoPlayList()], a playback control parameter storage area storing information such as playback control parameters

(2) [PlayList()], a playback stream information recording area recording information such as stream information for data to be played back in units of PlayItems included in the PlayList

(3) [PlayListMark()], a mark information recording area recording information such as playback start position information such as entry marks used for features such as chapter search, for example

(4) [ExtensionData()], an extension data recording area in which various extension data may be recorded

Embodiment 1 is an embodiment that records information about two video streams to an STN table in units of PlayItems set in the playback stream information recording area [PlayList()] 101 inside the PlayList file illustrated in FIG. 4.

In the playback stream information recording area [PlayList()] 101 of the PlayList file, a stream number table (STN table) is recorded.

In the stream number table (STN table), stream information about video, audio, and subtitles to be played back by PlayItems included in the PlayList is recorded.

The stream information includes the following two types of information:

(a) stream entry information (stream_entry), and

(b) stream attribute information (stream_attribute).

In the (a) stream entry information (stream_entry), information such as a packet identifier (ID) (PIDs) or other packet information corresponding to a packet identifier of a TS packet storing data is recorded. In the (b) stream attribute information (stream_attribute), information such as a stream number, language type, number of channels, and codec information is recorded, for example.

Note that the packet ID included in the stream entry information (stream_entry) is set to a different ID depending on the type of data stored in the packet. Specifically, a different ID is set depending on the data type, such as video, audio, or subtitles.

Furthermore, for video data, for example, different PIDs are set for different types of video. Likewise, for audio data and subtitle data, different PIDs are set for different language types (such as Japanese and English), for example.

Different PIDs are also set for the two sets of video data (video streams) used in playback method 2 (option X) discussed above, namely,

(X1) BDMV HDR video data (primary video stream), and

(X2) enhancement layer video data (enhancement layer (EL) video stream).

The playback device (player) is able to determine the type of data inside the packet (that is, video, audio, or subtitles) on the basis of the PID set in the packet header, and in addition, for packets storing video data, is able to determine whether the video data is (X1) BDMV HDR video data (primary video stream), or (X2) enhancement layer video data (enhancement layer (EL) video stream).

The stream number table (STN table) is recorded in units of PlayItems included in the PlayList file. FIG. 5 is a diagram illustrating a detailed structure of the playback stream information recording area [PlayList()] 101 in the PlayList file illustrated in FIG. 4.

In the playback stream information recording area [PlayList()] illustrated in FIG. 5, the following data recording areas are set:

(a) a number of PlayItems recording field [number_of_Playitems] 111, an area that records the number of PlayItems registered in the PlayList, and

(b) a PlayItem associated information recording area [Playitem()] 112, an area that records detailed information per each PlayItem.

In the PlayItem associated information recording area [Playitem()] 112, the stream number table (STN table) is recorded in units of PlayItem.

More specifically, "in units of PlayItems" means that information is recorded in units of each PlayItem identifier (Playitem_id).

FIG. 6 illustrates a detailed configuration example of a stream number table (STN table) in units of PlayItems.

The stream number table (STN table) in units of PlayItems illustrated in FIG. 6 is an example of an STN table set in correspondence with PlayItems used in ultra-high-definition (UHD) video playback.

As illustrated in FIG. 6, the following data recording areas are set in the STN table:

(a) a number of streams recording area 120 that records the number of streams per data type for which information is recorded in the STN table, and
(b) a stream information recording area 130, which is an information recording area corresponding to each stream.

In the number of streams recording area 120, the number of streams for each data type such as video, audio, and subtitles is recorded. The number of streams is recorded according to properties such as the type of video, and the language type of audio and subtitles.

For video streams, the present embodiment has a structure in which a number of streams recording area is set for the following two types of video data (video streams):

(X1) a number of primary video stream entries [number_of_primary_video_stream_entry] recording area 121 that records the number of BDMV HDR video data streams (primary video streams), and
(X2) a number of enhancement layer (EL) video stream entries [number_of_EL_video_stream_entry] recording area 122 that records the number of enhancement layer video data streams (enhancement layer (EL) video streams).

In the stream information recording area 130, information is successively recorded in units of each stream. For video streams, the present embodiment has a structure in which a stream information recording area is set for the following two types of video data (video streams):

(X1) a primary video stream information recording area 131 that records information about BDMV HDR video data (primary video stream), and
(X2) an enhancement layer (EL) video stream information recording area 132 that records information about enhancement layer video data (enhancement layer (EL) video stream).

The above information becomes video information associated with the same PlayItem (the same PlayItem identifier (pi_id)).

Note that if multiple primary video streams are included as registered streams in the STN table, a primary video stream information recording area is set in units of each stream, and information is recorded in units of each stream. Similarly, if multiple enhancement layer (EL) video streams are included as registered streams in the STN table, an enhancement layer (EL) video stream information recording area is set in units of each stream, and information is recorded in units of each stream.

Note that if multiple primary video streams and multiple enhancement layer (EL) video streams are registered with respect to one PlayItem, the correspondence relationships among these streams are ascertainably set by the PlayItem identifier (pi_id) and the stream identifier (ID).

In the primary video stream information recording area 131, the following two pieces of information related to a primary video stream are recorded:

(a) stream entry information (stream_entry), and
(b) stream attribute information (stream_attribute).

Similarly, in the enhancement layer (EL) video stream information recording area 132, the following two pieces of information related to an enhancement layer (EL) video stream are recorded:

(a) stream entry information (stream_entry), and
(b) stream attribute information (stream_attribute).

As discussed above, the respective information in (a) and (b) above includes the following information, for example. In the (a) stream entry information (stream_entry), information such as packet IDs (PIDs) or other packet information corresponding to packet identifiers of TS packets storing data is recorded.

In the (b) stream attribute information (stream_attribute), information such as a stream number, language type, number of channels, and codec information is recorded, for example.

FIG. 7 is a diagram illustrating a simplification of recorded information in a PlayList file in order to demonstrate the structure of the STN tables recorded in the PlayList file according to the present embodiment. FIG. 7 illustrates the following drawings:

(a) a PlayList file, and
(b) STN tables in units of PlayItems recorded in the PlayList file.

Note that the STN tables in (b) are set in units of PlayItems registered in the PlayList file, and in the example illustrated in FIG. 7, the following two STN tables are illustrated:

(b-#11) STN table corresponding to PlayItem #11, and
(b-#12) STN table corresponding to PlayItem #12.

The present embodiment records information about two video streams to respective STN tables in units of PlayItems set in a PlayList file.

In the PlayList file illustrated in FIG. 7(a), a PlayItem information recording area [Playitem()] is set in units of PlayItems registered in the PlayList file.

An STN table is recorded in each PlayItem information recording area [Playitem()] in units of PlayItems.

In each of the STN tables corresponding to each PlayItem, as illustrated in each (b-#11) and (b-#12) of FIG. 7, the following information recording areas are provided:

(X1) a primary video stream information recording area 131 that records information about BDMV HDR video data (primary video stream), and
(X2) an enhancement layer (EL) video stream information recording area 132 that records information about enhancement layer video data (enhancement layer (EL) video stream).

In each of these information recording areas 131 and 132, the following video information corresponding to a stream is recorded for each video stream:

(a) stream entry information (stream_entry), and
(b) stream attribute information (stream_attribute).

As discussed above, the respective information in (a) and (b) above includes the following information.

In the (a) stream entry information (stream_entry), information such as packet IDs (PIDs) or other packet information corresponding to packet identifiers of TS packets storing data is recorded.

In the (b) stream attribute information (stream_attribute), information such as a stream number, language type, number of channels, and codec information is recorded, for example.

When a playback device executes a playback process, a certain PlayList file is selected to act as the playback control information file for the playback data. Additionally, one or more PlayItems corresponding to playback data are selected from the PlayList file. Additionally, an STN table is read out from the PlayItem information recording area [Playitem()] in units of the selected PlayItem.

From the STN table in units of PlayItems, the playback device is able to acquire

(a) stream entry information (stream_entry), and
(b) stream attribute information (stream_attribute) for the following two sets of video data (video streams):

(X1) BDMV HDR video data (primary video stream), and
(X2) enhancement layer video data (enhancement layer (EL) video stream).

The playback device is able to acquire the respective information above for two sets of playback video data to be played back in accordance with a PlayItem set in correspondence with a prescribed data playback segment.

The playback device, by following the two sets of video stream-related information recorded in the STN table in units of PlayItems, is able to reliably acquire

(X1) information required for the playback of BDMV HDR video data (primary video stream), and
(X2) information required for the playback of enhancement layer video data (enhancement layer (EL) video stream).

According to this process, in a playback process using a certain PlayItem, playback method 2 (option X) described earlier with reference to FIG. 1 becomes able to reliably acquire two sets of video data (video streams), namely,

(X1) BDMV HDR video data, and
(X2) enhancement layer video data, and also becomes able to reliably execute a playback process using these two sets of video data in parallel.

FIG. 8 illustrates a table summarizing the information recorded in PlayList files according to the present embodiment.
The table illustrated in FIG. 8 illustrates correspondence relationships among recorded information in PlayLists recorded on disc as a playback control information file related to a certain piece of content recorded on disc.
The entries (1) and (2) in the table illustrated in FIG. 8 indicate information about a first PlayList file [0001.mpls] recorded on disc, while the entries (3) to (n) indicate information about another, second PlayList file [0002.mpls].
The entry (1) indicates information recorded in a PlayList file in association with the first PlayItem (Playitem #11) registered in the first PlayList file [0001.mpls], and is the recorded information in the PlayItem information recording area [Playitem()] set in association with the first PlayItem (Playitem #11) of the first PlayList file [0001.mpls].
The PlayItem identifier (pi_id) recorded in the PlayItem information recording area [Playitem()] is (Playitem #11), and an STN table (STN #11) is recorded in association with the PlayItem identifier (Playitem #11).
The following information is recorded in the STN table (STN #11) for the PlayItem (Playitem #11) :

(a) stream entry information (stream_entry), and
(b) stream attribute information (stream_attribute) regarding (X1) BDMV HDR video data (primary video stream), and in addition,
(a) stream entry information (stream_entry), and
(b) stream attribute information (stream_attribute) regarding (X2) enhancement layer video data (enhancement layer (EL) video stream).

The respective information above is recorded in the STN table (STN #11) for one PlayItem (Playitem #11).
When the playback device executes a playback process using the first PlayItem (Playitem #11) registered in the PlayList file [0001.mpls], the playback device becomes able to reliably acquire information about the above two sets of corresponding video data (the primary video stream and the enhancement layer (EL) video stream). Furthermore, by using the acquired two sets of video stream-related information, the playback device becomes able to execute a playback process according to playback method 2 (option X) described earlier with reference to FIG. 1.
The entry (2) illustrated in FIG. 8 indicates information recorded in a PlayList file in association with the second PlayItem (Playitem #12) registered in the first PlayList file [0001.mpls].
An STN table (STN #12) is recorded as the information corresponding to the second PlayItem (Playitem #12).
When the playback device conducts data playback using the second PlayItem (Playitem #12), the playback device is able to acquire, from the STN table (STN #12),

(a) stream entry information (stream_entry), and
(b) stream attribute information (stream_attribute) for the following two sets of video data (video streams):

(X1) BDMV HDR video data (primary video stream), and
(X2) enhancement layer video data (enhancement layer (EL) video stream).

By using the acquired two sets of video stream-related information, the playback device becomes able to execute a playback process according to playback method 2 (option X) .
Entry (3) and subsequent entries are similar to the above, and the playback device becomes able to acquire information about two sets of corresponding video data (a primary video stream and an enhancement layer (EL) video stream) from an STN table in units of PlayItems registered in a PlayList file.
By using the acquired two sets of video stream-related information, the playback device becomes able to reliably execute a playback process according to playback method 2 (option X).

3-2. (Embodiment 2) Embodiment that records information about enhancement layer video data (EL video stream) in units of PlayItems in extension data recording area set in PlayList file

Next, an embodiment that records information about enhancement layer video data (EL video stream) in units of PlayItems in an extension data recording area set in a PlayList file will be described as Embodiment 2.

As described earlier with reference to FIG. 4, the following four data object recording areas are provided in a PlayList file.

(1) [AppInfoPlayList()], a playback control parameter storage area storing information such as playback control parameters

(2) [PlayList()], a playback stream information recording area recording information such as stream information for data to be played back in units of PlayItems included in the PlayList

(3) [PlayListMark()], a mark information recording area recording information such as playback start position information such as entry marks used for features such as chapter search, for example

(4) [ExtensionData()], an extension data recording area in which various extension data may be recorded.

Embodiment 2 records video information about (X2) enhancement layer video data (EL video stream) in an extension data recording area inside the PlayList file illustrated in FIG. 4, namely, an extension data recording area [ExtensionData()] in which various extension data may be recorded.

Note that in the present embodiment, the STN table recording video information regarding (X1) BDMV HDR video data (primary video stream) is recorded as an STN table in units of PlayItems set in the playback stream information recording area [PlayList()] 101 inside the PlayList file illustrated in FIG. 4, similarly to Embodiment 1.

In other words, in the present embodiment, STN tables recording video information about the two sets of video data used in playback method 2 (option X) described earlier with reference to FIG. 1, namely,

(X1) BDMV HDR video data (primary video stream), and

(X2) enhancement layer video data (enhancement layer (EL) video stream) are recorded separately in the playback stream information recording area [PlayList()] 101 and the extension data recording area [ExtensionData()] 102 inside one PlayList file as illustrated in FIG. 4.

FIG. 9 and subsequent drawings will be referenced to describe an additional recording structure of an STN table for an extension data recording area [ExtensionData()] in a PlayList file.

FIG. 9 illustrates syntax indicating the data structure of the extension data recording area [ExtensionData()] of a PlayList file.

In the extension data recording area [ExtensionData()], various extension data not stated in other areas of the PlayList file may be recorded.

Note that since various extension data is recorded in the extension data recording area [ExtensionData()], an extension data identification data area 211 recording identification information for the extension data is set. Extension data defined by the identifiers (ID1, ID2) recorded in the extension data identification data area 211 is recorded in a data block 212.

In the present embodiment, the extension data recorded in the data block 212 is an STN table recording video stream information regarding HDR content, for example, in which is recorded video information regarding (X2) enhancement layer video data (enhancement layer (EL) video stream).

FIG. 10 illustrates an example of identifiers set in the extension data identification data area 211 that records identification information for extension data. As illustrated in FIG. 10, in the extension data recorded in the extension data recording area [ExtensionData()] is assigned an identifier according to the data type.

As indicated by the entry 221 illustrated in FIG. 10, the IDs

```
ID1=0x0003
```

and

```
ID2=0x0006
```

are prescribed as identification information indicating that the extension data recorded in the data block 212 is an STN table (STN_table_EL) regarding data used by playback method 2 (option X) described earlier with reference to FIG. 1, namely,

(X2) enhancement layer video data (enhancement layer (EL) video stream).

Note that extension data has already been defined for the following combinations of extension data identifiers (ID1, ID2) defining types of extension data:

$$(ID1, ID2)=(0x0001, 0x0001) \text{ to } (0x0001, 0x0002),$$

and

$$(ID1, ID2)=(0x0002, 0x0001) \text{ to } (0x0002, 0x0006).$$

At present, the combination of

$$ID1=0x0003$$

and

$$ID2=0x0006$$

is undefined, and this identification information

$$(ID1, ID2)=(0x0003, 0x0006)$$

is defined as extension data identification information indicating that the extension data is an STN table (STN_table_EL) regarding "(X2) enhancement layer video data (enhancement layer (EL) video stream)."

A specific example of the STN table (STN_table_EL) regarding "(X2) enhancement layer video data (enhancement layer (EL) video stream)" recorded in the data block 212 will be described with reference to FIG. 11 and subsequent drawings.

FIG. 11 is a syntax diagram illustrating the data structure of an STN table (STN_table_EL) corresponding to an enhancement layer (EL) video stream recorded in the extension data recording area [ExtensionData()] of a PlayList file.

The STN table is additionally recorded in the PlayList file as an STN table (STN_table_EL) recording video information about the enhancement layer (EL) video stream.

As discussed earlier, an STN table recording video information regarding the other set of video data used in playback method 2 (option X) described with reference to FIG. 1, namely,

(X1) BDMV HDR video data (primary video stream), is recorded as an STN table in units of PlayItems set in the playback stream information recording area [PlayList()] 101 inside the PlayList file illustrated in FIG. 4, similarly to Embodiment 1.

Note that the video information recorded in an STN table in Embodiment 2 is information similar to that of the STN table corresponding to the (X1) BDMV HDR video data (primary video stream) described in Embodiment 1.

The STN table syntax illustrated in FIG. 11 is the syntax of an STN table (STN_table_EL) corresponding to an enhancement layer (EL) video stream recorded in the extension data recording area [ExtensionData()].

The STN table is recorded for each PlayItem registered in the PlayList file, and more specifically, recorded in units of each PlayItem identifier (pi_id).

In the STN table associated PlayItem identifier (pi_id) recording area 230 illustrated in FIG. 11, a PlayItem identifier associated with the STN table is recorded.

In the STN table illustrated in FIG. 11, video information corresponding to an enhancement layer (EL) video stream is recorded.

As illustrated in FIG. 11, the following data recording areas are set in the STN table:

(a) a number of streams recording area 240 that records the number of stream entries in an enhancement layer (EL) video stream for which information is recorded in the STN table, and

(b) a stream information recording area 250, which is an information recording area corresponding to each stream.

In the number of streams recording area 240, there is recorded the number of stream entries in an enhancement layer (EL) video stream for which information is recorded in the STN table.
In the present embodiment, only video information corresponding to enhancement layer (EL) video streams is recorded in the STN table recorded in the extension data recording area [ExtensionData()].
In the stream information recording area 250, information is successively recorded in units of enhancement layer (EL) video streams.
Note that if multiple enhancement layer (EL) video streams are included as registered streams in the STN table, an enhancement layer (EL) video stream information recording area is set in units of each stream, and information is recorded in units of each stream.
Note that in this case, there is a possibility that multiple information recording areas corresponding to multiple primary video streams may also be set in the STN table in units of PlayItems set in the playback stream information recording area [PlayList()] 101 inside the PlayList file illustrated in FIG. 4.
The correspondence relationships between the multiple primary video streams and the multiple enhancement layer (EL) video streams are ascertainably set by the PlayItem identifier (pi_id) and the stream identifier (ID).
In the stream information recording area 250 corresponding to an enhancement layer (EL) video stream illustrated in FIG. 11, the following two pieces of information related to an enhancement layer (EL) video stream are recorded:

(a) stream entry information (stream_entry), and
(b) stream attribute information (stream_attribute).

As discussed above, the respective information in (a) and (b) above includes the following information, for example. In the (a) stream entry information (stream entry), information such as packet IDs (PIDs) or other packet information corresponding to packet identifiers of TS packets storing data is recorded.
In the (b) stream attribute information (stream attribute), information such as a stream number, language type, number of channels, and codec information is recorded, for example.
FIG. 12 is a diagram illustrating a simplification of recorded information in a PlayList file in order to demonstrate the structure of the STN tables recorded in the PlayList file according to the present embodiment. FIG. 12 illustrates the following drawings:

(a) a PlayList file,
(b) an STN table corresponding to a primary video stream recorded inside the playback stream information recording area [PlayList] inside the PlayList file, and
(c) an STN table corresponding to an enhancement layer (EL) video stream recorded in the extension data recording area [ExtensionData()] of the PlayList file.

The present embodiment records video information corresponding to a primary video stream in an STN table in units of PlayItems inside the playback stream information recording area [PlayList()] set in the PlayList file.
Furthermore, the present embodiment records video information corresponding to an enhancement layer (EL) video stream in an STN table in units of PlayItems recorded in the extension data recording area [ExtensionData()] of the PlayList file.
As illustrated in FIG. 12(a), in each the playback stream information recording area [PlayList()] and the extension data recording area [ExtensionData()] of the PlayList file, an STN table corresponding to a PlayItem is recorded in units of PlayItems (in units of PlayItem identifiers (playitem_id)) registered in the PlayList file.
These STN tables are the STN tables illustrated in FIGS. 12(b) and 12(c).
FIG. 12(b) is the structure of an STN table corresponding to the primary video stream for one PlayItem recorded in the playback stream information recording area [PlayList()] of the PlayList file.
As illustrated in FIG. 12(b), in this STN table, there is provided
(X1) a primary video stream information recording area 260 that records information about BDMV HDR video data (primary video stream).
Also, FIG. 12(c) is the structure data of an STN table corresponding to an enhancement layer (EL) video stream in units of PlayItems recorded in the extension data recording area [ExtensionData()].
As illustrated in FIG. 12(c), in this STN table, there is provided
(X2) an enhancement layer (EL) video stream information recording area 250 that records video information corresponding to enhancement layer video data (enhancement layer (EL) video stream).
In each of these information recording areas 250 and 260, the following information is recorded for each video stream:

(a) stream entry information (stream_entry), and
(b) stream attribute information (stream_attribute).

As discussed above, the respective information in (a) and (b) above includes the following information. In the (a) stream entry information (stream_entry), information such as packet IDs (PIDs) or other packet information corresponding to packet identifiers of TS packets storing data is recorded.
In the (b) stream attribute information (stream_attribute), information such as a stream number, language type, number of channels, and codec information is recorded, for example.
When a playback device executes a playback process, a certain PlayList file is selected to act as the playback control information file for the playback data. Additionally, one or more PlayItems corresponding to playback data are selected from the PlayList file. Furthermore, two STN tables recorded in correspondence with each selected PlayItems are read out.
Specifically, the STN tables read out at this point are the STN table corresponding to a primary video stream recorded in the playback stream information recording area [PlayList()] of the PlayList file, and the STN table corresponding to an enhancement layer (EL) video stream recorded in the extension data recording area [ExtensionData()] of the PlayList file.
In these two STN tables,

(X1) video information about BDMV HDR video data (primary video stream), and
(X2) video information about enhancement layer video data (enhancement layer (EL) video stream) is recorded.

From these two STN tables, the playback device acquires

(a) stream entry information (stream_entry), and
(b) stream attribute information (stream_attribute) for each video.

Note that the two STN tables from which to acquire video information are taken to be STN tables recorded in association with the same PlayItem identifier (pi_id).
The playback device is able to acquire the above information from each of two STN tables for two sets of playback video data to be played back in accordance with one PlayItem set in correspondence with a prescribed data playback segment.
In this way, the playback device is able to reliably acquire the following two pieces of video information, namely,

(X1) information required for the playback of BDMV HDR video data (primary video stream), and
(X2) information required for the playback of enhancement layer video data (enhancement layer (EL) video stream) in accordance with the two sets of video stream-related information recorded in the two STN tables corresponding to the same PlayItem recorded in the playback stream information recording area [Playitem()] and the extension data recording area [ExtensionData()].

According to this process, in a playback process using a certain PlayItem, playback method 2 (option X) described earlier with reference to FIG. 1 becomes able to reliably acquire information about two sets of video data (video streams), namely,

(X1) BDMV HDR video data, and
(X2) enhancement layer video data and also becomes able to reliably execute a playback process using these two sets of video data in parallel.

FIG. 13 illustrates a table summarizing the information recorded in a PlayList file according to the present embodiment.
The table illustrated in FIG. 13 illustrates correspondence relationships among recorded information in a PlayList recorded on disc for a certain piece of content recorded on disc.
The entries (1) to (4) in the table illustrated in FIG. 13 indicate information about a first PlayList file [0001.mpls] recorded on disc.
The entries (1) and (2) indicate information recorded in a PlayList file in association with the first PlayItem (Playitem #11) registered in the first PlayList file [0001.mpls].
The entry (1) is the recorded information in the PlayItem information recording area [Playitem()] set in association with the first PlayItem (Playitem #11) of the first PlayList file [0001.mpls].
The PlayItem identifier (pi_id) recorded in the PlayItem information recording area [Playitem()] is (Playitem #11), and an STN table (STN #11) is recorded in association with the PlayItem identifier (Playitem #11).

The following information is recorded in the STN table (STN #11) for the PlayItem (Playitem #11) :

(a) stream entry information (stream_entry), and
(b) stream attribute information (stream_attribute) regarding (X1) BDMV HDR video data (primary video stream).

In addition, the entry (2) is an entry about recorded information regarding enhancement layer video data (EL video stream) recorded in the extension data recording area [ExtensionData()] of the first PlayList file [0001.mpls].

The PlayItem identifier (pi_id) recorded in the extension data recording area [ExtensionData()] is (Playitem #11), and an STN table (STN #11) is recorded in association with the PlayItem identifier (Playitem #11).

The following information is recorded in the STN table (STN #11) for the PlayItem (Playitem #11):

(a) stream entry information (stream_entry), and
(b) stream attribute information (stream_attribute) regarding (X2) enhancement layer video data (enhancement layer (EL) video stream).

In this way, the entries (1) and (2) indicate recorded information in two STN tables (STN #11) corresponding to one PlayItem (Playitem #11).

When the playback device executes a playback process using the first PlayItem (Playitem #11) registered in the PlayList file [0001.mpls], the playback device becomes able to reliably acquire information about the above two sets of corresponding video data (the primary video stream and the enhancement layer (EL) video stream). Furthermore, by using the acquired two sets of video stream-related information, the playback device becomes able to execute a playback process according to playback method 2 (option X) described earlier with reference to FIG. 1.

The entries (3) and (4) illustrated in FIG. 13 indicate information recorded in a PlayList file in association with the second PlayItem (Playitem #12) registered in the first PlayList file [0001.mpls].

The entry (3) is the recorded information in the PlayItem information recording area [Playitem()] set in association with the second PlayItem (Playitem #12) of the first PlayList file [0001.mpls].

The PlayItem identifier (pi_id) recorded in the PlayItem information recording area [Playitem()] is (Playitem #12), and an STN table (STN #12) is recorded in association with the PlayItem identifier (Playitem #12).

The following information is recorded in the STN table (STN #12) for the PlayItem (Playitem #12):

(a) stream entry information (stream_entry), and
(b) stream attribute information (stream_attribute) regarding (X1) BDMV HDR video data (primary video stream).

In addition, the entry (4) is an entry about recorded information regarding enhancement layer video data (EL video stream) recorded in the extension data recording area [ExtensionData()] of the first PlayList file [0001.mpls].

The PlayItem identifier (pi_id) recorded in the extension data recording area [ExtensionData()] is (Playitem #12), and an STN table (STN #12) is recorded in association with the PlayItem identifier (Playitem #12).

The following information is recorded in the STN table (STN #12) for the PlayItem (Playitem #12):

(a) stream entry information (stream_entry), and
(b) stream attribute information (stream_attribute) regarding (X2) enhancement layer video data (enhancement layer (EL) video stream).

In this way, the entries (3) and (4) indicate recorded information in two STN tables (STN #12) corresponding to one PlayItem (Playitem #12).

When the playback device executes a playback process using the second PlayItem (Playitem #12) registered in the PlayList file [0001.mpls], the playback device becomes able to reliably acquire information about the above two sets of corresponding video data (the primary video stream and the enhancement layer (EL) video stream). Furthermore, by using the acquired two sets of video stream-related information, the playback device becomes able to execute a playback process according to playback method 2 (option X) described earlier with reference to FIG. 1.

4. Playback sequence by information processing device (playback device)

Next, the flowchart illustrated in FIG. 14 will be referenced to describe a playback sequence by an information processing device (playback device).

Note that the playback process described in the following is a playback sequence in the case of executing a playback process in accordance with playback method 2 (option X) from among the multiple playback methods described earlier with reference to FIG. 1.

As discussed earlier, playback method 2 (option X) conducts a playback process using two sets of video data (video streams), namely,

(X1) BDMV HDR video data (primary video stream), and
(X2) enhancement layer video data (enhancement layer (EL) video stream).

The playback device executes a playback process by acquiring video information corresponding to these two sets of video data from an STN table recorded inside a PlayList file that acts as a playback control information file.

For example, the information processing device (playback device) that executes video playback reads out a PlayList file that acts as a playback control information file supporting ultra-high-definition (UHD) video from a disc on which ultra-high-definition (UHD) video is recorded as data to be played back, reads out an STN table [STN_table] recording video information required for the process of playing back ultra-high-definition (UHD) video from the PlayList file, and executes a playback process.

A data processing unit of the playback device executes a process following the flowchart illustrated in FIG. 14. The data processing unit of the playback device includes a data processing unit including a central processing unit (CPU) or the like having a program execution function, and executes a process following the flow illustrated in FIG. 14 according to a program stored in advance in a storage unit. The processing in each step of the flow illustrated in FIG. 14 will be described sequentially.

(Step S101)

First, in step S101, the playback device selects a PlayList file that acts as a playback control information file corresponding to data to be played back.

As described earlier with reference to FIG. 2, the PlayList file that acts as a playback control information is stored on a disc on which the video data to be treated as playback data is recorded.

The data processing unit of the playback device selects a PlayList file to act as the playback control information file corresponding to the selected playback data according to a title corresponding to playback content selected by the user, or playback segment designation information, for example.

(Step S102)

Next, in step S102, the playback device selects a PlayItem corresponding to the data to be played back from the PlayList file selected in step S101.

The data processing unit of the playback device selects a PlayItem to act as playback segment designation information corresponding to the selected playback data, according to a playback title selected by the user, or playback segment information, for example.

As described earlier with reference to FIG. 2 and other drawings, in a PlayList file, one or more PlayItems are configured, and each PlayItem includes playback segment designation information with respect to data available for playback included in the Clip Layer (that is, Clip Information files and Clip AV Stream files).

(Step S103)

Next, in step S103, the data processing unit of the playback device acquires video information about BDMV HDR video data (primary video stream) from an STN table selected in accordance with selection information about the PlayList and the PlayItem selected in steps S101 and S102.

Specifically, first, the STN table recorded in association with the PlayItem identifier registered in the PlayList file is selected.

Furthermore, video information corresponding the following video data, namely,

(X1) video information about BDMV HDR video data (primary video stream) is acquired from the selected STN table.

Note that the STN table recording the above "(X1) video information about BDMV HDR video data (primary video stream)" is an STN table in units of PlayItems recorded in the playback stream information recording area [PlayList()] 101 inside the PlayList file illustrated in FIG. 4.

In the configuration of Embodiment 1 discussed above, an STN table recording video information regarding the following two sets of video data, namely,

an STN table recording video information about (X1) BDMV HDR video data (primary video stream) and
an STN table recording video information about (X2) enhancement layer video data (enhancement layer (EL) video stream) is recorded in units of PlayItems in the playback stream information recording area [PlayList()] 101 inside the PlayList file illustrated in FIG. 4, as described with reference to FIGS. 5 to 8.

Meanwhile, in the configuration of Embodiment 2 discussed above, two STN tables individually recording video information regarding the following set of video data, namely,

STN tables recording video information about (X1) BDMV HDR video data (primary video stream) are recorded in units of PlayItems in the playback stream information recording area [PlayList()] 101 inside the PlayList file illustrated in FIG. 4, as described with reference to FIGS. 9 to 13.

In the case of either embodiment, in step S103, the playback device acquires the following video information, namely,

(X1) video information about BDMV HDR video data (primary video stream)

from an STN table recorded in units of PlayItems in the playback stream information recording area [PlayList()] 101 inside the PlayList file illustrated in FIG. 4.

Note that the video information acquired from the STN table specifically includes, for example, the following information:

(a) stream entry information (stream_entry), and
(b) stream attribute information (stream_attribute).

As discussed above, the respective information in (a) and (b) above includes the following information, for example. In the (a) stream entry information (stream_entry), information such as packet IDs (PIDs) or other packet information corresponding to packet identifiers of TS packets storing data is included.

In the (b) stream attribute information (stream_attribute), information such as a stream number, language type, number of channels, and codec information is included, for example.

(Step S104)

Next, in step S104, the data processing unit of the playback device acquires video information about enhancement layer video data (enhancement layer (EL) video stream) from an STN table selected in accordance with selection information about the PlayList file and the PlayItem selected in steps S101 and S102.

Specifically, first, the STN table recorded in association with the PlayItem identifier registered in the PlayList file is selected.

Furthermore, video information corresponding to the following video data, namely,

(X2) video information about enhancement layer video data (enhancement layer (EL) video stream) is acquired from the selected STN table.

Note that the STN table recording the above "(X2) video information about enhancement layer video data (enhancement layer (EL) video stream)" is recorded at different locations between the case of the configuration in Embodiment 1 and the case of the configuration in Embodiment 2 discussed earlier.

In Embodiment 1, the information is recorded in an STN table in units of PlayItems recorded in the playback stream information recording area [PlayList()] 101 inside the PlayList file illustrated in FIG. 4.

In the configuration of Embodiment 1 discussed above, an STN table jointly recording video information regarding the following two sets of video data, namely,

(X1) video information about BDMV HDR video data (primary video stream), and
(X2) video information about enhancement layer video data (enhancement layer (EL) video stream) is recorded in units of PlayItems in the playback stream information recording area [PlayList()] 101 inside the PlayList file illustrated in FIG. 4, as described with reference to FIGS. 5 to 8.

In the case of the configuration in Embodiment 1, the STN table from which to acquire "video information about enhancement layer video data (enhancement layer (EL) video stream)" in step S104 and the STN table selected in order to acquire "video information about BDMV HDR video data (primary video stream)" in step S103 are the same STN table.

However, in the configuration of Embodiment 2 discussed earlier, the STN table recording "(X2) video information about enhancement layer video data (enhancement layer (EL) video stream)" is recorded in the extension data recording area [ExtensionData()] 102 inside the PlayList file illustrated in FIG. 4.

In Embodiment 2, an STN table recording video information regarding the following set of video data, namely, an STN table recording video information about (X2) enhancement layer video data (enhancement layer (EL) video stream) is recorded in units of PlayItems in the extension data recording area [ExtensionData()] 102 inside the PlayList file, as described with reference to FIGS. 9 to 13.

In this way, the playback device acquires

an STN table recording video information about (X2) enhancement layer video data (enhancement layer (EL) video stream) from different recording areas of the PlayList file between the case of the configuration in Embodiment 1 and the case of the configuration in Embodiment 2.

In the case of the configuration in Embodiment 1, the STN table is acquired from the playback stream information recording area [PlayList()] 101 inside the PlayList file illustrated in FIG. 4.

In the case of the configuration in Embodiment 2, the STN table is acquired from the extension data recording area [ExtensionData()] 102 inside the PlayList file illustrated in FIG. 4.

Note that the video information acquired from the STN table includes the following information, for example.

(a) Stream entry information (stream_entry)
(b) Stream attribute information (stream_attribute)

(Step S105)

Lastly, in step S105, the playback device uses the following video information acquired from the STN table in units of PlayItems recorded in the PlayList file, namely,

(X1) video information about BDMV HDR video data (primary video stream), and
(X2) video information about enhancement layer video data (enhancement layer (EL) video stream) to execute a video playback and output process.

In this way, when the playback device executes a playback process in accordance with playback method 2 (option X) described earlier with reference to FIG. 1, video information regarding the following two sets of video data required for playback method 2 (option X), namely, (X1) BDMV HDR video data (primary video stream), and (X2) enhancement layer video data (enhancement layer (EL) video stream) may be acquired from an STN table associated in units of PlayItems.

The playback device is able to acquire video information regarding these two sets of video data (video streams) from the STN table associated in units of PlayItems, and conduct reliable data playback.

5. Process of generating data to record onto medium (authoring), and data recording process

The embodiments discussed above primarily describe a content playback process using a PlayList file recorded on disc.

However, a configuration according to an embodiment of the present disclosure includes not only a data playback process, but also a process of generating data to record onto a medium (authoring) and recording the data onto a medium, as well as an information recording medium on which such data is recorded.

For example, an information processing device that executes the generation of data to record onto a medium (authoring) executes a process of generating the PlayList file discussed above.

Specifically, the information processing device includes a data processing unit that executes a process of generating data to record onto a disc. The data processing unit executes a process of generating a PlayList file including

(X1) video information about BDMV HDR video data (primary video stream), and
(X2) video information about enhancement layer video data (enhancement layer (EL) video stream) as a playback control information file corresponding to playback data. Note that the video information is recorded in an STN table set in units of PlayItems.

In the STN table the following information about video is recorded:

(a) stream entry information (stream_entry), and
(b) stream attribute information (stream_attribute).

As discussed above, the respective information in (a) and (b) above includes the following information, for example. In the (a) stream entry information (stream_entry), information such as packet IDs (PIDs) or other packet information corresponding to packet identifiers of TS packets storing data is included.

In the (b) stream attribute information (stream_attribute), information such as a stream number, language type, number of channels, and codec information is included, for example.

Also, an information recording medium storing data generated by the above recorded data generation process has, the following configuration, for example. An information recording medium recording a playback data storage file and a playback control information file corresponding to the playback data storage file, in which the playback control information file includes an STN table storing video information regarding the following video data:

(X1) video information about BDMV HDR video data (primary video stream), and
(X2) video information about enhancement layer video data (enhancement layer (EL) video stream).

Note that the STN table is recorded as a table in units of PlayItems associated with a PlayItem identifier.
A playback device that conducts playback of a disc recording such data, as described in the foregoing embodiments, is able to reference the STN table in the PlayList file, and acquire video information required for the playback of ultra-high-definition (UHD) video.

6. Application to other data playback methods

The foregoing embodiments describe an example process for the case of executing a playback process in accordance with playback method 2 (option X) from among the three playback methods described earlier with reference to FIG 1.
As discussed earlier, playback method 2 (option X) is a playback method that conducts a playback process by using two sets of video data (video streams), namely,

(X1) BDMV HDR video data (primary video stream), and
(X2) enhancement layer video data (enhancement layer (EL) video stream).

The playback device executes a playback process by acquiring video information corresponding to these two sets of video data from an STN table recorded inside a PlayList file that acts as a playback control information file.
A process according to an embodiment of the present disclosure is not limited to playback method 2, and is also applicable to various methods that use two sets of video data in parallel when playing back video data. Allowable encoded data of video which may be stored according to the MPEG-2 TS format includes, for example, the following encoded data:
MPEG-1, MPEG-2, AVC (MPEG-4 AVC), HEVC (MPEG-4 HEVC). Among these types of encoded data, HEVC encoded data is subjected to a playback process applying a main bitstream and a sub bitstream in parallel, for example.
Video information regarding the sub bitstream may be configured to be recorded in an STN table corresponding to "(X2) enhancement layer video data (enhancement layer (EL) video stream)" described in the foregoing embodiments.
In other words, the two sets of video data discussed above, namely

(X1) BDMV HDR video data, and
(X2) enhancement layer video data may be replaced by two sets of video data constituting HEVC encoded data, namely, (a1) main bitstream, and
(a2) sub bitstream, and a process in accordance with the foregoing embodiments may be conducted.

Also, for the playback of three-dimensional (3D) video, parallel playback of multiple sets of video data, such as a combination of left-eye video and right-eye video, or a combination of a base view and a dependent view, is executed. The configuration described in the foregoing embodiments may be applied as an information recording configuration related to two sets of video data for 3D video.
The two sets of video data discussed above, namely,

(X1) BDMV HDR video data, and
(X2) enhancement layer video data may be replaced by two sets of video data constituting 3D video data, namely, (a1) left-eye video (or base view) stream, and
(a2) right-eye video (or dependent view) stream, and a process in accordance with the foregoing embodiments may be conducted.

7. Example configuration of information processing device

Next, an example hardware configuration of an information processing device applicable as a disc playback device, a recorded data playback device, a data recording device, or an information recording medium fabrication device will be described with reference to FIG. 15.
A central processing unit (CPU) 301 functions as a data processing unit that executes various processing operations according to a program stored in read-only memory (ROM) 302 or a storage unit 308. For example, processes following the sequences described in the foregoing embodiments are executed. Random access memory (RAM) 303 stores information such as programs executed by the CPU 301, and data. The CPU 301, ROM 302, and RAM 303 are interconnected by a bus 304.

The CPU 301 is connected to an input/output interface 305 via the bus 304. Connected to the input/output interface 305 are an input unit 306, which includes devices such as various switches, a keyboard, a mouse, and a microphone, and an output unit 307, which includes devices such as a display and one or more speakers. The CPU 301 executes various processes in response to commands input from the input unit 306, and outputs processing results to the output unit 307, for example.

A storage unit 308 connected to the input/output interface 305 includes a hard disk or the like, for example, and stores programs executed by the CPU 301 and various data. A communication unit 309 functions as a transceiving unit for data communication via a network such as the Internet or a local area network, additionally functions as a transceiving unit for broadcast waves, and communicates with external devices.

A drive 310 connected to the input/output interface 305 drives a removable medium 311 such as a magnetic disk, an optical disc, a magneto-optical disc, or semiconductor memory such as a memory card, and executes the recording or reading of data.

Note that the encoding or decoding of data is executable as a process by the CPU 301 acting as the data processing unit, but a configuration equipped with a codec in the form of dedicated hardware for executing an encoding process or a decoding process is also acceptable.

8. Conclusion of constitution of present disclosure So far, embodiments of the present disclosure have been described in detail with reference to specific embodiments. However, it should be noted that various variations and alternative embodiments will become apparent to those skilled in the art without departing from the scope of the present disclosure. That is, it should be noted that the present disclosure is disclosed through embodiments and is not construed in a manner limited by these embodiments. In order to determine the scope of the present disclosure, it is necessary to consider the scope of the claims.

Furthermore, the processing sequence that is explained in the specification can be implemented by hardware, by software and by a configuration that combines hardware and software. In a case where the processing is implemented by software, it is possible to install in memory within a computer that is incorporated into dedicated hardware a program in which the processing sequence is recorded and to execute the program. It is also possible to install a program in a general-purpose computer that is capable of performing various types of processing and to execute the program. For example, the program can be installed in advance in a storage medium. In addition to being installed in a computer from the storage medium, the program can also be received through a network, such as a local area network (LAN) or the Internet, and can be installed in a storage medium such as a hard disk or the like that is built into the computer.

Note that the various types of processing that are described in this specification may not only be performed in a temporal sequence as has been described, but may also be performed in parallel or individually, in accordance with the processing capacity of the device that performs the processing or as needed. Furthermore, the system in this specification is not limited to being a configuration that logically aggregates a plurality of devices, all of which are contained within the same housing.

[Industrial Applicability]

Thus, as described above, according to an embodiment of the present disclosure, there is realized a configuration enabling the acquisition of video information about multiple sets of video data to apply to ultra-high-definition (UHD) video playback, and video playback applying the multiple sets of video data.

Specifically, video information about multiple sets of video data to apply to ultra-high-definition video playback is recorded in an STN table in units of PlayItems registered in a PlayList file. For example, by recording video information regarding BDMV HDR video data (primary video stream) and video information regarding enhancement layer video data (enhancement layer (EL) video stream) in the STN table in units of PlayItems, during playback it is possible to execute reliable decoding and playback processes based on the video information regarding these two sets of video data. According to this configuration, there is realized a configuration enabling the acquisition of video information about multiple sets of video data to apply to ultra-high-definition (UHD) video playback, and video playback applying the multiple sets of video data.

[Reference Signs List]

10    Information recording medium (disc)
51    Management information configuration section
52    Data section

301      CPU
302      ROM
303      RAM
304      Bus
305      Input/output interface
306      Input unit
307      Output unit
308      Storage unit
309      Communication unit
310      Drive
311      Removable medium

**Claims**

1. An information processing device comprising:

   a data processing unit (301) configured to execute a playback process of playing back Ultra-High-Definition (UHD) video data recorded on disc (10), wherein
   the data processing unit (301) is configured to

   acquire a playback control information file corresponding to playback data recorded on disc,
   acquire multiple pieces of video information corresponding to multiple sets of video data in a same playback segment from the acquired playback control information file, and
   apply the acquired multiple pieces of video information to execute a decoding and playback process of decoding and playing back the multiple sets of video data in the same playback segment, and
   the multiple pieces of video information corresponding to the multiple sets of video data acquired by the data processing unit is two pieces of video information corresponding to the following two sets of video data

   (1) video information (131, 260) regarding Blu-ray (registered trademark) disc movie high dynamic range video data (primary video stream), and
   (2) video information (132, 250) regarding enhancement layer video data (enhancement layer video stream).

2. The information processing device according to claim 1, wherein
   the playback control information file is a PlayList file, and
   the data processing unit (301) is configured to
   acquire the multiple pieces of video information corresponding to the multiple sets of video data from a stream number table corresponding to a PlayItem recorded in the PlayList file.

3. The information processing device according to claim 1, wherein
   the video information includes

   (a) stream entry information (stream_entry), and
   (b) stream attribute information (stream_attribute), and

   the data processing unit is configured to

   acquire a playback control information file corresponding to playback data recorded on disc,
   acquire multiple pieces of video information corresponding to multiple sets of video data in a same playback segment from the acquired playback control information file, and
   apply the acquired multiple pieces of video information to execute a decoding and playback process of decoding and playing back the multiple sets of video data in the same playback segment.

4. The information processing device according to claim 1, wherein
   the playback control information file is a PlayList file, and
   the data processing unit (301) is configured to
   acquire the multiple pieces of video information corresponding to the multiple sets of video data from a stream number table corresponding to a PlayItem recorded in a playback stream information recording area [PlayList()] of the PlayList file.

5. The information processing device according to claim 4, wherein
the stream number table is a table recording two pieces of video information corresponding to the following two sets of video data

(1) video information regarding Blu-ray disc movie high dynamic range video data (primary video stream), and
(2) video information regarding enhancement layer video data (enhancement layer video stream), and

the data processing unit (301) is configured to
acquire the two pieces of video information corresponding to the two sets of video data from one stream number table corresponding to a PlayItem recorded in a playback stream information recording area [PlayList()] of the PlayList file.

6. The information processing device according to claim 1, wherein
the playback control information file is a PlayList file, and
the data processing unit is configured to

acquire one piece of video information corresponding to one set of video data among the multiple sets of video data from a stream number table corresponding to a PlayItem recorded in a playback stream information recording area [PlayList()] of the PlayList file, and
acquire one piece of video information corresponding to one set of video data among the multiple sets of video data from a stream number table corresponding to a PlayItem recorded in an extension data recording area [ExtensionData()] of the PlayList file.

7. The information processing device according to claim 6, wherein the data processing unit is configured to
acquire (1) video information regarding Blu-ray disc movie high dynamic range video data (primary video stream) from the stream number table corresponding to a PlayItem recorded in the playback stream information recording area [PlayList()] of the PlayList file, and
acquire (2) video information regarding enhancement layer video data (enhancement layer video stream) from the stream number table corresponding to a PlayItem recorded in the extension data recording area [ExtensionData()] of the PlayList file.

8. The information processing device according to claim 1, wherein
the data processing unit is configured to
acquire, from the playback control information, multiple pieces of video information corresponding to multiple sets of video data in a same playback segment required for playback of ultra-high-definition video, and
apply the acquired multiple pieces of video information to execute a decoding and playback process of decoding and playing back the multiple sets of video data in the same playback segment.

9. An information processing device comprising:

a data processing unit configured to execute a generation process of generating data to record onto a medium, wherein
the data processing unit is configured to

generate a playback control information file recording multiple pieces of video information corresponding to multiple sets of video data in a same playback segment, and the data processing unit is configured to, record, to the playback control information file, two pieces of video information corresponding to the following two sets of video data

(1) video information regarding Blu-ray (registered trademark) disc movie high dynamic range video data (primary video stream), and
(2) video information regarding enhancement layer video data (enhancement layer video stream).

10. The information processing device according to claim 9, wherein
the playback control information file is a PlayList file, and

the data processing unit (301) is configured to
execute a process of recording the multiple pieces of video information corresponding to the multiple sets of video data in a stream number table corresponding to a PlayItem recorded in the PlayList file;
preferably wherein
the video information includes

(a) stream entry information (stream_entry), and
(b) stream attribute information (stream_attribute); and

the data processing unit (301) is configured to generate a playback control information file recording each (a) and (b) above as multiple pieces of video information corresponding to multiple sets of video data in a same playback segment..

11. An information recording medium recording a playback data storage file and a playback control information file corresponding to the playback data storage file, wherein the playback control information file is a playback control information file recording multiple pieces of video information corresponding to multiple sets of video data in a same playback segment, and
the information recording medium is structured to enable a playback device configured to play back the playback data to acquire the playback control information file, and from the acquired playback control information file, acquire multiple pieces of video information corresponding to multiple sets of video data in a same playback segment, and apply the acquired multiple pieces of video information to execute a decoding and playback process of decoding and playing back the multiple sets of video data in the same playback segment,
the playback control information file is a PlayList file, and
the multiple pieces of video information corresponding to the multiple sets of video data is two pieces of video information corresponding to the following two sets of video data

(1) video information regarding Blu-ray (registered trademark) disc movie high dynamic range video data (primary video stream), and
(2) video information regarding enhancement layer video data (enhancement layer video stream).

12. An information processing method in an information processing device, the information processing device including a data processing unit configured to execute a playback process of playing back data recorded on disc,
the information processing method, executed by the data processing unit, comprising:

acquiring a playback control information file corresponding to playback data recorded on disc;
acquiring multiple pieces of video information corresponding to multiple sets of video data in a same playback segment from the acquired playback control information file; and
applying the acquired multiple pieces of video information to execute a decoding and playback process of decoding and playing back the multiple sets of video data in the same playback segment, wherein
the multiple pieces of video information corresponding to the multiple sets of video data acquired by the data processing unit is two pieces of video information corresponding to the following two sets of video data

(1) video information regarding Blu-ray (registered trademark) disc movie high dynamic range video data (primary video stream), and
(2) video information regarding enhancement layer video data (enhancement layer video stream).

13. An information processing method in an information processing device, the information processing device including a data processing unit configured to execute a generation process of generating data to record onto a medium, the information processing method, executed by the data processing unit, comprising:

generating a playback control information file recording multiple pieces of video information corresponding to multiple sets of video data in a same playback segment, wherein
the data processing unit records, to the playback control information file, two pieces of video information corresponding to the following two sets of video data

(1) video information regarding Blu-ray (registered trademark) disc movie high dynamic range video data (primary video stream), and
(2) video information regarding enhancement layer video data (enhancement layer video stream).

14. A program causing information processing to be executed in an information processing device, the information processing device including a data processing unit configured to execute a playback process of playing back data recorded on disc;
the program causing the data processing unit to execute:

a process of acquiring a playback control information file corresponding to playback data recorded on disc;
a process of acquiring multiple pieces of video information corresponding to multiple sets of video data in a same playback segment from the acquired playback control information file; and
a process of applying the acquired multiple pieces of video information to execute a decoding and playback process of decoding and playing back the multiple sets of video data in the same playback segment,
the multiple pieces of video information corresponding to the multiple sets of video data acquired by the data processing unit is two pieces of video information corresponding to the following two sets of video data

(1) video information regarding Blu-ray (registered trademark) disc movie high dynamic range video data (primary video stream), and
(2) video information regarding enhancement layer video data (enhancement layer video stream).

15. A program causing information processing to be executed in an information processing device, the information processing device including a data processing unit configured to execute a generation process of generating data to record onto a medium, the program causing the data processing unit to execute:
a process of generating a playback control information file recording multiple pieces of video information corresponding to multiple sets of video data in a same playback segment, and the program causing the data processing unit to record, as recorded information of the playback control information, two pieces of video information corresponding to the following two sets of video data

(1) video information regarding Blu-ray (registered trademark) disc movie high dynamic range video data (primary video stream), and
(2) video information regarding enhancement layer video data (enhancement layer video stream).

**Patentansprüche**

1. Informationsverarbeitungsvorrichtung umfassend:

eine Datenverarbeitungseinheit (301), die dazu ausgelegt ist, einen Wiedergabevorgang zur Wiedergabe von auf einer Platte (10) aufgezeichneten Ultra-High-Definition (UHD)-Videodaten auszuführen, wobei die Datenverarbeitungseinheit (301) dazu ausgelegt ist eine Wiedergabesteuerungsinformationsdatei zu erfassen, die den auf der Platte aufgezeichneten Wiedergabedaten entspricht,
mehrere Videoinformationen, die mehreren Sätzen von Videodaten in einem gleichen Wiedergabesegment entsprechen, aus der erfassten Wiedergabesteuerinformationsdatei zu erfassen, und
die erfassten mehreren Videoinformationen anzuwenden, um einen Dekodierungs- und Wiedergabevorgang zur Dekodierung und Wiedergabe der mehreren Sätze von Videodaten im gleichen Wiedergabesegment auszuführen, und
die mehreren Videoinformationen, die den mehreren von der Datenverarbeitungseinheit erfassten Sätzen von Videodaten entsprechen, zwei Videoinformationen sind, die den folgenden zwei Sätzen von Videodaten entsprechen

(1) Videoinformationen (131, 260) bezüglich der Videodaten von Blu-ray (eingetragenes Warenzeichen) Disc-Filmen mit hohem Dynamikbereich (primärer Videostream), und
(2) Videoinformationen (132, 250) bezüglich der Enhancement Layer Videodaten (Enhancement Layer Videostream).

2. Informationsverarbeitungsvorrichtung nach Anspruch 1, wobei die Wiedergabesteuerinformationsdatei eine Playlist-Datei ist und die Datenverarbeitungseinheit (301) dazu ausgelegt ist, die mehreren Videoinformationen, die den mehreren Sätzen von Videodaten entsprechen, aus einer Streamnummerntabelle zu erfassen, die einem in der Playlist-Datei aufgezeichneten PlayItem entspricht.

3. Informationsverarbeitungsvorrichtung nach Anspruch 1, wobei die Videoinformationen enthalten

a) Informationen über den Streameintritt (stream_entry) und
b) Informationen über die Streamattribute (stream_attribute) und

die Datenverarbeitungseinheit dazu ausgelegt ist eine Wiedergabesteuerungsinformationsdatei zu erfassen, die den auf der Platte aufgezeichneten Wiedergabedaten entspricht,
mehrere Videoinformationen, die mehreren Sätzen von Videodaten in einem gleichen Wiedergabesegment entsprechen, aus der erfassten Wiedergabesteuerinformationsdatei zu erfassen, und
die erfassten mehreren Videoinformationen anzuwenden, um einen Dekodierungs- und Wiedergabevorgang zur Dekodierung und Wiedergabe der mehreren Sätze von Videodaten im gleichen Wiedergabesegment auszuführen.

4.  Informationsverarbeitungsvorrichtung nach Anspruch 1, wobei
die Wiedergabesteuerungsinformationsdatei eine PlayList-Datei ist, und
die Datenverarbeitungseinheit (301) dazu ausgelegt ist die mehreren Videoinformationen, die den mehreren Sätzen von Videodaten entsprechen, aus einer Streamnummerntabelle zu erfassen, die einem PlayItem entspricht, das in einem Aufzeichnungsbereich für Wiedergabestreaminformationen [PlayList()] der PlayList-Datei aufgezeichnet wurde.

5.  Informationsverarbeitungsvorrichtung nach Anspruch 4, wobei
die Streamnummerntabelle eine Tabelle ist, in der zwei Videoinformationen aufgezeichnet werden, die den folgenden zwei Sätzen von Videodaten entsprechen

(1) Videoinformationen bezüglich der Videodaten von Blu-ray Disc-Filmen mit hohem Dynamikbereich (primärer Videostream), und
(2) Videoinformationen bezüglich der Enhancement Layer Videodaten (Enhancement Layer Videostream), und
die Datenverarbeitungseinheit (301) dazu ausgelegt ist die zwei Videoinformationen, die den zwei Sätzen von Videodaten entsprechen, aus einer Streamnummerntabelle zu erfassen, die einem PlayItem entspricht, das in einem Aufzeichnungsbereich für Wiedergabestreaminformationen [PlayList()] der PlayList-Datei aufgezeichnet wurde.

6.  Informationsverarbeitungsvorrichtung nach Anspruch 1, wobei
die Wiedergabesteuerungsinformationsdatei eine PlayList-Datei ist, und
die Datenverarbeitungseinheit dazu ausgelegt ist die eine Videoinformation, die dem einen Satz von Videodaten unter mehreren Sätzen von Videodaten entspricht, aus einer Streamnummerntabelle zu erfassen, die einem PlayItem entspricht, das in einem Aufzeichnungsbereich für Wiedergabestreaminformationen [PlayList()] der PlayList-Datei aufgezeichnet wurde, und
eine Videoinformation, die dem einen Satz von Videodaten unter mehreren Sätzen von Videodaten entspricht, aus einer Streamnummerntabelle zu erfassen, die einem PlayItem entspricht, das in einem Aufzeichnungsbereich für Erweiterungsdaten [ExtensionData()] der PlayList-Datei aufgezeichnet wurde.

7.  Informationsverarbeitungsvorrichtung nach Anspruch nach Anspruch 6, wobei die Datenverarbeitungseinheit dazu ausgelegt ist
Videoinformationen bezüglich der Videodaten eines Blu-ray Disc-Films mit hohem Dynamikbereich (primärer Videostream) aus der Streamnummerntabelle zu erfassen (1), die einem im Aufzeichnungsbereich für Wiedergabestreaminformationen [PlayList()] der PlayList-Datei aufgezeichneten PlayItem entspricht, und Videoinformationen bezüglich der Videoinformationen bezüglich der Enhancement Layer Videodaten (Enhancement Layer Video Stream) aus der Streamnummerntabelle zu erfassen (2), die einem im Erweiterungsdaten-Aufzeichnungsbereich [ExtensionData()] der PlayList-Datei aufgezeichneten PlayItem entspricht.

8.  Informationsverarbeitungsvorrichtung nach Anspruch 1, wobei
die Datenverarbeitungseinheit dazu ausgelegt ist aus den Wiedergabesteuerinformationen mehrere Videoinformationen zu erfassen, die mehreren Sätzen von Videodaten in einem gleichen Wiedergabesegment entsprechen, die für die Wiedergabe von Ultra-High-Definition-Video erforderlich sind, und
die erfassten mehreren Videoinformationen anzuwenden, um einen Dekodierungs- und Wiedergabevorgang zur Dekodierung und Wiedergabe der mehreren Sätze von Videodaten im gleichen Wiedergabesegment auszuführen.

9.  Informationsverarbeitungsvorrichtung umfassend:

eine Datenverarbeitungseinheit, die dazu ausgelegt ist,

einen Erzeugungsvorgang zum Erzeugen von Daten zur Aufzeichnung auf einem Medium auszuführen, wobei die Datenverarbeitungseinheit dazu ausgelegt ist eine Wiedergabesteuerinformationsdatei zu erzeugen, die mehrere Videoinformationen aufzeichnet, die mehreren Sätzen von Videodaten in einem gleichen Wiedergabesegment entsprechen, und die Datenverarbeitungseinheit dazu ausgelegt ist, in die Wiedergabesteuerungsinformationsdatei zwei Videoinformationen aufzuzeichnen, die den folgenden zwei Sätzen von Videodaten entsprechen

(1) Videoinformationen bezüglich der Videodaten von Blu-ray (eingetragenes Warenzeichen) Disc-Filmen mit hohem Dynamikbereich (primärer Videostream), und
(2) Videoinformationen bezüglich der Enhancement Layer Videodaten (Enhancement Layer Videostream).

**10.** Informationsverarbeitungsvorrichtung nach Anspruch 9, wobei
die Wiedergabesteuerungsinformationsdatei eine PlayList-Datei ist, und
die Datenverarbeitungseinheit (301) dazu ausgelegt ist einen Vorgang zur Aufzeichnung der mehreren Videoinformationen auszuführen, die den mehreren Sätzen von Videodaten in einer Streamnummerntabelle entsprechen, die einem in der Playlist-Datei aufgenommenen PlayItem entspricht;
wobei vorzugsweise
die Videoinformationen enthalten

a) Informationen über den Streameintritt (stream_entry) und
b) Informationen über die Streamattribute (stream_attribute); und

die Datenverarbeitungseinheit (301) dazu ausgelegt ist, eine Wiedergabesteuerinformationsdatei zu erzeugen, die jeweils (a) und (b) wie oben beschrieben als mehrere Videoinformationen aufzeichnet, die mehreren Sätzen von Videodaten in einem gleichen Wiedergabesegment entsprechen.

**11.** Informationsaufzeichnungsmedium, das eine Wiedergabedatenspeicherdatei und eine Wiedergabesteuerinformationsdatei, die der Wiedergabedatenspeicherdatei entspricht, aufzeichnet, wobei die Wiedergabesteuerinformationsdatei eine Wiedergabesteuerinformationsdatei ist, die mehrere Videoinformationen aufzeichnet, die mehreren Sätzen von Videodaten in einem gleichen Wiedergabesegment entsprechen, und
das Informationsaufzeichnungsmedium so strukturiert ist, dass es einer Wiedergabevorrichtung ermöglicht, die Wiedergabedaten wiederzugeben, um die Wiedergabesteuerinformationsdatei zu erfassen und von der erfassten Wiedergabesteuerinformationsdatei mehrere Videoinformationen zu erfassen, die mehreren Sätzen von Videodaten in demselben Wiedergabesegment entsprechen, und die erfassten mehreren Videoinformationen anzuwenden, um einen Dekodierungs- und Wiedergabevorgang zur Dekodierung und Wiedergabe der mehreren Sätze von Videodaten in demselben Wiedergabesegment auszuführen,
die Wiedergabesteuerungsinformationsdatei eine PlayList-Datei ist, und
die mehreren Videoinformationen, die den mehreren Sätzen von Videodaten entsprechen, zwei Videoinformationen sind, die den folgenden zwei Sätzen von Videodaten entsprechen

(1) Videoinformationen bezüglich der Videodaten von Blu-ray (eingetragenes Warenzeichen) Disc-Filmen mit hohem Dynamikbereich (primärer Videostream), und
(2) Videoinformationen bezüglich der Enhancement Layer Videodaten (Enhancement Layer Videostream).

**12.** Informationsverarbeitungsverfahren in einer Informationsverarbeitungsvorrichtung, wobei die Informationsverarbeitungsvorrichtung eine Datenverarbeitungseinheit enthält, die dazu ausgelegt ist, einen Wiedergabevorgang zur Wiedergabe von auf einer Platte aufgezeichneten Daten auszuführen,
wobei das Informationsverarbeitungsverfahren, das von der Datenverarbeitungseinheit ausgeführt wird, umfasst:

Erfassen einer Wiedergabesteuerinformationsdatei, die den auf einer Platte aufgezeichneten Wiedergabedaten entspricht;
Erfassen mehrerer Videoinformationen, die mehreren Sätzen von Videodaten in einem gleichen Wiedergabesegment entsprechen, aus der erfassten Wiedergabesteuerinformationsdatei; und Anwenden der erfassten mehreren Videoinformationen, um einen Dekodierungs- und Wiedergabevorgang zur Dekodierung und Wiedergabe der mehreren Sätze von Videodaten im gleichen Wiedergabesegment auszuführen, wobei die mehreren Videoinformationen, die den mehreren von der Datenverarbeitungseinheit erfassten Sätzen von Videodaten entsprechen, zwei Videoinformationen sind, die den folgenden zwei Sätzen von Videodaten entsprechen

(1) Videoinformationen bezüglich der Videodaten von Blu-ray (eingetragenes Warenzeichen) Disc-Filmen mit hohem Dynamikbereich (primärer Videostream), und
(2) Videoinformationen bezüglich der Enhancement Layer Videodaten (Enhancement Layer Videostream).

13. Informationsverarbeitungsverfahren in einer Informationsverarbeitungsvorrichtung, wobei die Informationsverarbeitungsvorrichtung eine Datenverarbeitungseinheit enthält, die dazu ausgelegt ist, einen Erzeugungsvorgang zum Erzeugen von Daten zur Aufzeichnung auf einem Medium auszuführen, wobei das Informationsverarbeitungsverfahren, das von der Datenverarbeitungseinheit ausgeführt wird, umfasst:
Erzeugen einer Wiedergabesteuerinformationsdatei, die mehrere Videoinformationen aufzeichnet, die mehreren Sätzen von Videodaten in einem gleichen Wiedergabesegment entsprechen, wobei die Datenverarbeitungseinheit in die Wiedergabesteuerungsinformationsdatei zwei Videoinformationen aufzeichnet, die den folgenden zwei Sätzen von Videodaten entsprechen

(1) Videoinformationen bezüglich der Videodaten von Blu-ray (eingetragenes Warenzeichen) Disc-Filmen mit hohem Dynamikbereich (primärer Videostream), und
(2) Videoinformationen bezüglich der Enhancement Layer Videodaten (Enhancement Layer Videostream).

14. Programm, das die Ausführung der Informationsverarbeitung in einer Informationsverarbeitungsvorrichtung veranlasst, wobei die Informationsverarbeitungsvorrichtung eine Datenverarbeitungseinheit enthält, die dazu ausgelegt ist, einen Wiedergabevorgang zur Wiedergabe von auf einer Platte aufgezeichneten Daten auszuführen;
wobei das Programm die Datenverarbeitungseinheit veranlasst, folgendes auszuführen:

einen Vorgang zur Erfassung einer Wiedergabesteuerinformationsdatei, die den auf der Platte aufgezeichneten Wiedergabedaten entspricht;
einen Vorgang zur Erfassung mehrerer Videoinformationen, die mehreren Sätzen von Videodaten in einem gleichen Wiedergabesegment entsprechen, aus der erfassten Wiedergabesteuerinformationsdatei; und
einen Vorgang zur Anwendung der erfassten mehreren Videoinformationen, um einen Dekodierungs- und Wiedergabevorgang zur Dekodierung und Wiedergabe der mehreren Sätze von Videodaten im gleichen Wiedergabesegment auszuführen,
die mehreren Videoinformationen, die den mehreren von der Datenverarbeitungseinheit erfassten Sätze von Videodaten entsprechen, zwei Videoinformationen sind, die den folgenden zwei Sätzen von Videodaten entsprechen

(1) Videoinformationen bezüglich der Videodaten von Blu-ray (eingetragenes Warenzeichen) Disc-Filmen mit hohem Dynamikbereich (primärer Videostream), und
(2) Videoinformationen bezüglich der Enhancement Layer Videodaten (Enhancement Layer Videostream).

15. Programm, das die Ausführung von Informationsverarbeitung in einer Informationsverarbeitungsvorrichtung veranlasst, wobei die Informationsverarbeitungsvorrichtung eine Datenverarbeitungseinheit enthält, die dazu ausgelegt ist, einen Erzeugungsvorgang zur Erzeugung von Daten zur Aufzeichnung auf einem Medium auszuführen, wobei das Programm die Datenverarbeitungseinheit veranlasst, folgendes auszuführen:
einen Vorgang zum Erzeugen einer Wiedergabesteuerinformationsdatei, die mehrere Videoinformationen aufzeichnet, die mehreren Sätzen von Videodaten in einem gleichen Wiedergabesegment entsprechen, und wobei das Programm die Datenverarbeitungseinheit veranlasst, als aufgezeichnete Information der Wiedergabesteuerinformation zwei Videoinformationen aufzuzeichnen, die den folgenden zwei Sätzen von Videodaten entsprechen

(1) Videoinformationen bezüglich der Videodaten von Blu-ray (eingetragenes Warenzeichen) Disc-Filmen mit hohem Dynamikbereich (primärer Videostream), und
(2) Videoinformationen bezüglich der Enhancement Layer Videodaten (Enhancement Layer Videostream).

## Revendications

1. Dispositif de traitement d'informations comportant :

une unité (301) de traitement de données configurée pour exécuter un processus de lecture consistant à lire des données vidéo à ultra haute définition (UHD) enregistrées sur disque (10), l'unité (301) de traitement de données étant configurée pour acquérir un fichier d'informations de commande de lecture correspondant à des données de lecture enregistrées sur disque,

acquérir des éléments multiples d'informations vidéo correspondant à des ensembles multiples de données vidéo dans un même segment de lecture à partir du fichier d'informations de commande de lecture acquis, et appliquer les éléments multiples d'informations vidéo acquis pour exécuter un processus de décodage et de lecture consistant à décoder et à lire les ensembles multiples de données vidéo dans le même segment de lecture, et

les éléments multiples d'informations vidéo qui correspondent aux ensembles multiples de données vidéo acquis par l'unité de traitement de données étant deux éléments d'informations vidéo correspondant aux deux ensembles suivants de données vidéo

(1) des informations vidéo (131, 260) concernant des données vidéo à grande dynamique de film sur disque Blu-ray (marque déposée) (flux vidéo primaire), et
(2) des informations vidéo (132, 250) concernant des données vidéo de couche d'amélioration (flux vidéo de couche d'amélioration).

2.  Dispositif de traitement d'informations selon la revendication 1,
    le fichier d'informations de commande de lecture étant un fichier PlayList, et
    l'unité (301) de traitement de données étant configurée pour acquérir les éléments multiples d'informations vidéo qui correspondent aux ensembles multiples de données vidéo à partir d'une table de numéros de flux correspondant à un PlayItem enregistré dans le fichier PlayList.

3.  Dispositif de traitement d'informations selon la revendication 1,
    les informations vidéo comprenant

    (a) des informations d'entrée de flux (stream_entry), et
    (b) des informations d'attribut de flux (stream_attribute), et

    l'unité de traitement de données étant configurée pour

    acquérir un fichier d'informations de commande de lecture correspondant à des données de lecture enregistrées sur disque,
    acquérir des éléments multiples d'informations vidéo correspondant à des ensembles multiples de données vidéo dans un même segment de lecture à partir du fichier d'informations de commande de lecture acquis, et appliquer les éléments multiples d'informations vidéo acquis pour exécuter un processus de décodage et de lecture consistant à décoder et à lire les ensembles multiples de données vidéo dans le même segment de lecture.

4.  Dispositif de traitement d'informations selon la revendication 1,
    le fichier d'informations de commande de lecture étant un fichier PlayList, et
    l'unité (301) de traitement de données étant configurée pour
    acquérir les éléments multiples d'informations vidéo qui correspondent aux ensembles multiples de données vidéo à partir d'une table de numéros de flux correspondant à un PlayItem enregistré dans une zone d'enregistrement d'informations de flux de lecture [PlayList()] du fichier PlayList.

5.  Dispositif de traitement d'informations selon la revendication 4,
    la table de numéros de flux étant une table enregistrant deux éléments d'informations vidéo correspondant aux deux ensembles suivants de données vidéo

    (1) des informations vidéo concernant des données vidéo à grande dynamique de film sur disque Blu-ray (flux vidéo primaire), et
    (2) des informations vidéo concernant des données vidéo de couche d'amélioration (flux vidéo de couche d'amélioration), et

    l'unité (301) de traitement de données étant configurée pour
    acquérir les deux éléments d'informations vidéo correspondant aux deux ensembles de données vidéo à partir d'une seule table de numéros de flux correspondant à un PlayItem enregistré dans une zone d'enregistrement d'informations de flux de lecture [PlayList()] du fichier PlayList.

6.  Dispositif de traitement d'informations selon la revendication 1, le fichier d'informations de commande de lecture étant un fichier PlayList, et

l'unité de traitement de données étant configurée pour

acquérir un seul élément d'informations vidéo correspondant à un seul ensemble de données vidéo parmi les ensembles multiples de données vidéo à partir d'une table de numéros de flux correspondant à un PlayItem enregistré dans une zone d'enregistrement d'informations de flux de lecture [PlayList()] du fichier PlayList, et

acquérir un seul élément d'informations vidéo correspondant à un seul ensemble de données vidéo parmi les ensembles multiples de données vidéo à partir d'une table de numéros de flux correspondant à un PlayItem enregistré dans une zone d'enregistrement de données d'extension [ExtensionData()] du fichier PlayList.

7. Dispositif de traitement d'informations selon la revendication 6,

l'unité de traitement de données étant configurée pour

acquérir (1) des informations vidéo concernant des données vidéo à grande dynamique de film sur disque Blu-ray (flux vidéo primaire) à partir de la table de numéros de flux correspondant à un PlayItem enregistré dans la zone d'enregistrement d'informations de flux de lecture [PlayList()] du fichier PlayList, et

acquérir (2) des informations vidéo concernant des données vidéo de couche d'amélioration (flux vidéo de couche d'amélioration) à partir de la table de numéros de flux correspondant à un PlayItem enregistré dans la zone d'enregistrement de données d'extension [ExtensionData()] du fichier PlayList.

8. Dispositif de traitement d'informations selon la revendication 1,

l'unité de traitement de données étant configurée pour

acquérir, à partir des informations de commande de lecture, des éléments multiples d'informations vidéo correspondant à des ensembles multiples de données vidéo dans un même segment de lecture requis pour la lecture de vidéo à ultra haute définition, et

appliquer les éléments multiples d'informations vidéo acquis pour exécuter un processus de décodage et de lecture consistant à décoder et à lire les ensembles multiples de données vidéo dans le même segment de lecture.

9. Dispositif de traitement d'informations comportant :

une unité de traitement de données configurée pour exécuter un processus de génération consistant à générer des données à enregistrer sur un support,

l'unité de traitement de données étant configurée pour

générer un fichier d'informations de commande de lecture enregistrant des éléments multiples d'informations vidéo correspondant à des ensembles multiples de données vidéo dans un même segment de lecture, et l'unité de traitement de données étant configurée pour

enregistrer, dans le fichier d'informations de commande de lecture, deux éléments d'informations vidéo correspondant aux deux ensembles suivants de données vidéo

(1) des informations vidéo concernant des données vidéo à grande dynamique de film sur disque Blu-ray (marque déposée) (flux vidéo primaire), et

(2) des informations vidéo concernant des données vidéo de couche d'amélioration (flux vidéo de couche d'amélioration).

10. Dispositif de traitement d'informations selon la revendication 9,

le fichier d'informations de commande de lecture étant un fichier PlayList, et

l'unité (301) de traitement de données étant configurée pour

exécuter un processus d'enregistrement des éléments multiples d'informations vidéo qui correspondent aux ensembles multiples de données vidéo dans une table de numéros de flux correspondant à un PlayItem enregistré dans le fichier PlayList ;

de préférence :

les informations vidéo comprenant

(a) des informations d'entrée de flux (stream_entry), et

(b) des informations d'attribut de flux (stream_attribute) ; et

l'unité (301) de traitement de données étant configurée pour générer un fichier d'informations de commande de lecture enregistrant chacun des (a) et (b) ci-dessus en tant qu'éléments multiples d'informations vidéo correspondant à des ensembles multiples de données vidéo dans un même segment de lecture.

**11.** Support d'enregistrement d'informations enregistrant un fichier de stockage de données de lecture et un fichier d'informations de commande de lecture correspondant au fichier de stockage de données de lecture,

le fichier d'informations de commande de lecture étant un fichier d'informations de commande de lecture enregistrant des éléments multiples d'informations vidéo correspondant à des ensembles multiples de données vidéo dans un même segment de lecture, et

le support d'enregistrement d'informations étant structuré pour permettre à un dispositif de lecture configuré pour lire les données de lecture d'acquérir le fichier d'informations de commande de lecture, et à partir du fichier d'informations de commande de lecture acquis, d'acquérir des éléments multiples d'informations vidéo correspondant à des ensembles multiples de données vidéo dans un même segment de lecture, et d'appliquer les éléments multiples d'informations vidéo acquis pour exécuter un processus de décodage et de lecture consistant à décoder et à lire les ensembles multiples de données vidéo dans le même segment de lecture,

le fichier d'informations de commande de lecture étant un fichier PlayList, et

les éléments multiples d'informations vidéo qui correspondent aux ensembles multiples de données vidéo étant deux éléments d'informations vidéo correspondant aux deux ensembles suivants de données vidéo

(1) des informations vidéo concernant des données vidéo à grande dynamique de film sur disque Blu-ray (marque déposée) (flux vidéo primaire), et

(2) des informations vidéo concernant des données vidéo de couche d'amélioration (flux vidéo de couche d'amélioration).

**12.** Procédé de traitement d'informations dans un dispositif de traitement d'informations, le dispositif de traitement d'informations comprenant une unité de traitement de données configurée pour exécuter un processus de lecture consistant à lire des données enregistrées sur disque,

le procédé de traitement d'informations, exécuté par l'unité de traitement de données, comportant les étapes consistant à :

acquérir un fichier d'informations de commande de lecture correspondant à des données de lecture enregistrées sur disque ;

acquérir des éléments multiples d'informations vidéo correspondant à des ensembles multiples de données vidéo dans un même segment de lecture à partir du fichier d'informations de commande de lecture acquis ; et appliquer les éléments multiples d'informations vidéo acquis pour exécuter un processus de décodage et de lecture consistant à décoder et à lire les ensembles multiples de données vidéo dans le même segment de lecture,

les éléments multiples d'informations vidéo qui correspondent aux ensembles multiples de données vidéo acquis par l'unité de traitement de données étant deux éléments d'informations vidéo correspondant aux deux ensembles suivants de données vidéo

(1) des informations vidéo concernant des données vidéo à grande dynamique de film sur disque Blu-ray (marque déposée) (flux vidéo primaire), et

(2) des informations vidéo concernant des données vidéo de couche d'amélioration (flux vidéo de couche d'amélioration).

**13.** Procédé de traitement d'informations dans un dispositif de traitement d'informations, le dispositif de traitement d'informations comprenant une unité de traitement de données configurée pour exécuter un processus de génération consistant à générer des données à enregistrer sur un support, le procédé de traitement d'informations, exécuté par l'unité de traitement de données, comportant les étapes consistant à :

générer un fichier d'informations de commande de lecture enregistrant des éléments multiples d'informations vidéo correspondant à des ensembles multiples de données vidéo dans un même segment de lecture, l'unité de traitement de données enregistrant, dans le fichier d'informations de commande de lecture, deux éléments d'informations vidéo correspondant aux deux ensembles suivants de données vidéo

(1) des informations vidéo concernant des données vidéo à grande dynamique de film sur disque Blu-ray (marque déposée) (flux vidéo primaire), et

(2) des informations vidéo concernant des données vidéo de couche d'amélioration (flux vidéo de couche d'amélioration).

**14.** Programme provoquant l'exécution d'un traitement d'informations dans un dispositif de traitement d'informations, le dispositif de traitement d'informations comprenant une unité de traitement de données configurée pour exécuter un processus de lecture consistant à lire des données enregistrées sur disque ;
le programme amenant l'unité de traitement de données à exécuter :

un processus d'acquisition d'un fichier d'informations de commande de lecture correspondant à des données de lecture enregistrées sur disque ;
un processus d'acquisition d'éléments multiples d'informations vidéo correspondant à des ensembles multiples de données vidéo dans un même segment de lecture à partir du fichier d'informations de commande de lecture acquis ; et
un processus d'application des éléments multiples d'informations vidéo acquis pour exécuter un processus de décodage et de lecture consistant à décoder et à lire les ensembles multiples de données vidéo dans le même segment de lecture,
les éléments multiples d'informations vidéo qui correspondent aux ensembles multiples de données vidéo acquis par l'unité de traitement de données étant deux éléments d'informations vidéo correspondant aux deux ensembles suivants de données vidéo

(1) des informations vidéo concernant des données vidéo à grande dynamique de film sur disque Blu-ray (marque déposée) (flux vidéo primaire), et
(2) des informations vidéo concernant des données vidéo de couche d'amélioration (flux vidéo de couche d'amélioration).

15. Programme provoquant l'exécution d'un traitement d'informations dans un dispositif de traitement d'informations, le dispositif de traitement d'informations comprenant une unité de traitement de données configurée pour exécuter un processus de génération consistant à générer des données à enregistrer sur un support, le programme amenant l'unité de traitement de données à exécuter :
un processus de génération d'un fichier d'informations de commande de lecture enregistrant des éléments multiples d'informations vidéo correspondant à des ensembles multiples de données vidéo dans un même segment de lecture, et le programme amenant l'unité de traitement de données à enregistrer, en tant qu'informations enregistrées des informations de commande de lecture, deux éléments d'informations vidéo correspondant aux deux ensembles suivants de données vidéo

(1) des informations vidéo concernant des données vidéo à grande dynamique de film sur disque Blu-ray (marque déposée) (flux vidéo primaire), et
(2) des informations vidéo concernant des données vidéo de couche d'amélioration (flux vidéo de couche d'amélioration).

# FIG.1

| PLAYBACK METHOD | (A) DATA USED FOR PLAY BACK | (B) SPECIFIC PLAYBACK METHOD |
|---|---|---|
| PLAYBACK METHOD 1 (REQUIRED) | BDMV HDR VIDEO DATA + METADATA CORRESPONDING TO BDMV HDR VIDEO DATA | EXECUTE PLAYBACK USING STANDARDIZED BASE HDR VIDEO DATA AND METADATA CORRESPONDING TO BDMV HDR VIDEO DATA |
| PLAYBACK METHOD 2 (OPTION X) | BDMV HDR VIDEO DATA + ENHANCEMENT LAYER VIDEO DATA | CONDUCT PLAYBACK PROCESS JOINTLY USING TWO SETS OF VIDEO DATA: STANDARDIZED BASE HDR VIDEO DATA, AND SECOND SET OF VIDEO DATA (ENHANCEMENT LAYER VIDEO DATA) CORRESPONDING TO PLAYBACK METHOD 2 (OPTION X) |
| PLAYBACK METHOD 3 (OPTION Y) | BDMV HDR VIDEO DATA + METADATA CORRESPONDING TO PLAYBACK METHOD 3 (OPTION Y) | CONDUCT PLAYBACK PROCESS USING STANDARDIZED BASE HDR VIDEO DATA, IN ACCORDANCE WITH METHOD RECORDED IN REFERENCED METADATA CORRESPONDING TO PLAYBACK METHOD 3 (OPTION Y) |

# FIG.2

10
INFORMATION
RECORDING MEDIUM
(BD-ROM)

Root

51
- AACS
  - CPSUnitKey.cci

52
- BDMV
  - index.bdmv        } INDEX FILE
  - MovieObject.bdmv  } MOVIE OBJECT FILE
  - PLAYLIST
    - 00001.mpls      } PLAYLIST FILE
  - CLIPINF
    - 01001.clpi      } CLIP INFORMATION FILE
    - 01002.clpi
  - STREAM
    - 01001.m2ts      } CLIP AV STREAM FILE
    - 01002.m2ts
  - BDJO
    - 00001.bdjo      } BDJ OBJECT FILE
    - 00002.bdjo

F I G . 3

FIG.4

| Syntax | No. of bits | Mnemonic |
|---|---|---|
| xxxx. mpls{ | | |
|     type__Indicator | 8 * 4 | bslbf |
|     version__number | 8 * 4 | bslbf |
|     playList__start__address | 32 | uimsbf |
|     playlistMark__start__address | 32 | uimsbf |
|     ExtensionData__start__address | 32 | uimsbf |
|     reserved | 160 | bslbf |
|     ApplInfoPlayList() | | |
|     for (i=0;i<N1;i++){ | | |
|         padding__word | 16 | bslbf |
|     } | | |
|     PlayList() | | |
|     for (i=0;i<N2;i++){ | | |
|         padding__word | 16 | bslbf |
|     } | | |
|     PlayListMark() | | |
|     for (i=0;i<N3;i++){ | | |
|         padding__word | 16 | bslbf |
|     } | | |
|     ExtensionData() | | |
|     for (i=0;i<N4;i++){ | | |
|         padding__word | 16 | bslbf |
|     } | | |
| } | | |

101

102

EP 3 285 260 B1

# FIG.5

| Syntax | No. of bits | Mnemonic |
|---|---|---|
| PlayList() | | |
| length | 32 | uimbsf |
| reserved_for_future_use | 16 | bslbf |
| number_of_Playitems | 16 | uimsbf |
| number_of_subitems | 16 | uimsbf |
| for(Playitem_id=0;<br>    Playitem_id<number_of_Playitems;<br>    Playitem_id++) { | | |
|     Playitem() | | |
|     } | . | |
| for(Subpqth_id=0;<br>    Subpath_id<number_of_Subpaths;<br>    Subpath_id++) { | | |
|     Subpath() | | |
|     } | | |
| } | | |

111

112

EP 3 285 260 B1

# F I G . 6

| Syntax | No. of bits | Mnemonic |
|---|---|---|
| STN_table() { | | |
|     length | 16 | uimsbf |
|     reserved_for_future_use | 16 | bslbf |
|     number_of_primary_video_stream_entries | 8 | uimsbf |
|     number_of_primary_audio_stream_entries | 8 | uimsbf |
| : | : | : |
|     number_of_PiP_PG_textST_stream_entries_plus | 8 | uimsbf |
|     **number_of_EL_video_streams_entries** | 8 | uimbsf |
|     reserved_for_future_use | 32 | bslbf |
|     for (primary_video_stream_id=0;<br>        primary_video_stream_id<<br>                number_of_primary_video_stream_entries;<br>    primary_video_stream_id++) { | | |
|         stream_entry() | | |
|         stream_attributes() | | |
|     } | | |
|     for (primary_audio_stream_id=0;<br>        primary_audio_stream_id <<br>                number_of_primary_audio_stream_entries;<br>    primary_audio_stream_id++) { | | |
|         stream_entry() | | |
|         stream_attributes() | | |
|     } | | |
| : | : | : |
|     } | | |
|     } | | |
|     **for (EL_video_stream_id=0;**<br>        **EL_video_stream_id<**<br>                **number_of_EL_video_stream_entries;**<br>    **EL_video_stream_id++) {** | | |
|         **stream_entry()** | | |
|         **stream_attributes()** | | |
|     } | | |
| } | | |

# FIG.7

(a) PLAYLIST FILE

```
00000.mpls{
...
   PlayList(){
      ...
      PlayItem(){
...
         Playitem_id=#11
         STN_table()

         Playitem_id=#12
         STN_table()


            ...


         }
         }
         ...
      }
   ...
}
```

(b-#11) STN TABLE CORRESPONDING TO PLAYITEM (#11)

```
STN_table()

   ...
      primary_video_stream_id=xx    ⎫
                                    ⎬ 131
         sream_entry()              ⎭
         stream attributes()
         . . .
         . . .

      EL(enhancement_layer_video_stream_id=xx ⎫
                                              ⎬ 132
         sream_entry()                        ⎭
         stream attributes()
         . . .
         . . .
```

(b-#12) STN TABLE CORRESPONDING TO PLAYITEM (#12)

```
STN_table()

   ...
      primary_video_stream_id=xx    ⎫
                                    ⎬ 131
         sream_entry()              ⎭
         stream attributes()
         . . .
         . . .

      EL(enhancement_layer_video_stream_id=xx ⎫
                                              ⎬ 132
         sream_entry()                        ⎭
         stream attributes()
         . . .
         . . .
```

# FIG.8

| | PLAYLIST | PLAYITEM IDENTIFIER RECORDED IN PLAYBACK STREAM INFORMATION [PlayList()] AREA | STN | PRIMARY VIDEO STREAM INFORMATION | ENHANCEMENT LAYER VIDEO STREAM INFORMATION |
|---|---|---|---|---|---|
| (1) | 0001. mpls ⇕ 0001. mpls | Playitem#11 | STN#11 | STREAM ENTRY INFORMATION AND STREAM ATTRIBUTE INFORMATION CORRESPONDING TO PRIMARY VIDEO STREAM (PRv11) | STREAM ENTRY INFORMATION AND STREAM ATTRIBUTE INFORMATION CORRESPONDING TO ENHANCEMENT LAYER VIDEO STREAM (ELv11) |
| (2) | | Playitem#12 | STN#12 | STREAM ENTRY INFORMATION AND STREAM ATTRIBUTE INFORMATION CORRESPONDING TO PRIMARY VIDEO STREAM (PRv12) | STREAM ENTRY INFORMATION AND STREAM ATTRIBUTE INFORMATION CORRESPONDING TO ENHANCEMENT LAYER VIDEO STREAM (ELv12) |
| (3) | 0002. mpls ⇕ 0002. mpls | Playitem#21 | STN#21 | STREAM ENTRY INFORMATION AND STREAM ATTRIBUTE INFORMATION CORRESPONDING TO PRIMARY VIDEO STREAM (PRv21) | STREAM ENTRY INFORMATION AND STREAM ATTRIBUTE INFORMATION CORRESPONDING TO ENHANCEMENT LAYER VIDEO STREAM (ELv21) |
| ⋮ | ⋮ | ⋮ | ⋮ | ⋮ | ⋮ |
| (n) | | Playitem#2n | STN#2n | STREAM ENTRY INFORMATION AND STREAM ATTRIBUTE INFORMATION CORRESPONDING TO PRIMARY VIDEO STREAM (PRv2n) | STREAM ENTRY INFORMATION AND STREAM ATTRIBUTE INFORMATION CORRESPONDING TO ENHANCEMENT LAYER VIDEO STREAM (ELv2n) |
| ⋮ | ⋮ | ⋮ | ⋮ | ⋮ | ⋮ |

EP 3 285 260 B1

# FIG. 9

| Syntax | No. of bits | Mnemonic |
|---|---|---|
| ExtensionData() { | | |
| length | 32 | uimsbf |
| if(length !=0) { | | |
| data_block_start_address | 32 | uimsbf |
| reserved | 24 | bslbf |
| number_of_ext_data_entries | 8 | uimsbf |
| for (i=0;i<number_of_ext_data_entries;i++){ | | |
| ext_data_entry() { | | |
| ID1 | 16 | uimsbf |
| ID2 | 16 | uimsbf |
| ext_data_start_address | 32 | uimsbf |
| ext_data_length | 32 | uimsbf |
| } | | |
| } | | |
| for (i=0<;i<L1;i++){ | | |
| padding_word | 16 | bslbf |
| padding_word | 16 | bslbf |
| } | | |
| data_block | 32+<br>8 * (length−<br>data_block_<br>start_address) | |
| } | | |
| } | | |

211

212

EP 3 285 260 B1

# FIG.10

| ID1 | ID2 | Data |
|---|---|---|
| 0x0001 | 0x0001 | ... |
| : | : | : |
| 0x0002 | 0x0001 | ... |
| : | : | : |
| 0x0002 | 0x0006 | ... |
| 0x0003 | 0x0001 | ... |
| : | : | : |
| 0x0003 | 0x0006 | STN_table_EL |
| : | : | : |

221

EP 3 285 260 B1

# F I G . 1 1

| Syntax | No. of bits | Mnemonic |
|---|---|---|
| STN_table_EL() { | | |
|   for (pi_id=0; pi_id<number_of_PlayItems; pi_id++ ) { | | |
|     STN_table_EL_for_PlayItem(pi_id) { | | |
|       length[pi_id] | 16 | uimsbf |
|       number_of_EL_video_stream_entries[pi_id] | 8 | uimsbf |
|       reserved_for_future_use | 8 | bslbf |
|       for (EL_video_stream_id=0;<br>        EL_video_stream_id<<br>          number_of_EL_video_stream_entries[pi_id];<br>        EL_video_stream_id++) { | | |
|         stream_entry() | | |
|         stream_attributes() | | |
|       } | | |
|     } | | |
|   } | | |
| } | | |

230, 240, 250

EP 3 285 260 B1

# FIG.12

(a) PLAYLIST FILE

```
00000.mpls{
...
   PlayList(){
      ...
      PlayItem(){
         ...
         Playitem_id=#11
            STN_table()
         }
      }
   ExtensionData(){
   ...
      Playitem_id=#11
         STN_table_EL()
         }
      }
      ...
   }
...
}
```

(b) STN TABLE CORRESPONDING TO PRIMARY VIDEO FOR PLAYITEM (#11)

```
STN_table()
   ...
   ...
      primary_video_stream_id=xx  ┐
         sream_entry()             ├ 260
         stream attributes()       ┘
         . . .
         . . .
```

(c) STN TABLE CORRESPONDING TO ENHANCEMENT LAYER (EL) VIDEO FOR PLAYITEM (#11)

```
STN_table_EL()
   ...
   ...
      EL(enhancement_layer_video_stream_id=xx  ┐
         sream_entry()                          ├ 250
         stream attributes()                    ┘
         . . .
         . . .
```

EP 3 285 260 B1

# F I G . 1 3

| | PLAYLIST | PLAYITEM IDENTIFIER RECORDED IN PLAYBACK STREAM INFORMATION [PlayList()] AREA | PLAYITEM IDENTIFIER RECORDED IN EXTENSION DATA [ExtensionData()] AREA | STN | PRIMARY VIDEO STREAM INFORMATION | ENHANCEMENT LAYER VIDEO STREAM INFORMATION |
|---|---|---|---|---|---|---|
| (1) | 0001. mpls | Playitem#11 | | STN#11 | STREAM ENTRY INFORMATION AND STREAM ATTRIBUTE INFORMATION CORRESPONDING TO PRIMARY VIDEO STREAM (PRv11) | |
| (2) | | | Playitem#11 | STN#11 | | STREAM ENTRY INFORMATION AND STREAM ATTRIBUTE INFORMATION CORRESPONDING TO ENHANCEMENT LAYER VIDEO STREAM (ELv11) |
| (3) | | Playitem#12 | | STN#12 | STREAM ENTRY INFORMATION AND STREAM ATTRIBUTE INFORMATION CORRESPONDING TO PRIMARY VIDEO STREAM (PRv12) | |
| (4) | 0001. mpls | | Playitem#12 | STN#12 | | STREAM ENTRY INFORMATION AND STREAM ATTRIBUTE INFORMATION CORRESPONDING TO ENHANCEMENT LAYER VIDEO STREAM (ELv12) |
| ⋮ | ⋮ | ⋮ | ⋮ | ⋮ | ⋮ | ⋮ |

EP 3 285 260 B1

# FIG.14

```
                    ┌─────────────┐
                    │    START    │
                    └─────────────┘
                           │
                           ▼
┌──────────────────────────────────────────────┐
│         SELECT PLAYLIST FILE TO ACT           │  S101
│    AS PLAYBACK CONTROL INFORMATION FILE       │
│    CORRESPONDING TO DATA TO BE PLAYED BACK    │
└──────────────────────────────────────────────┘
                           │
                           ▼
┌──────────────────────────────────────────────┐
│      FROM PLAYLIST FILE, SELECT PLAYITEM      │  S102
│    CORRESPONDING TO DATA TO BE PLAYED BACK    │
└──────────────────────────────────────────────┘
                           │
                           ▼
┌──────────────────────────────────────────────────────────────┐
│           FROM STN TABLE RECORDED IN ASSOCIATION              │  S103
│    WITH PLAYITEM IDENTIFIER OF SELECTED PLAYITEM, ACQUIRE     │
│  (X1) VIDEO INFORMATION ABOUT BDMV HDR VIDEO DATA (PRIMARY VIDEO STREAM)  │
└──────────────────────────────────────────────────────────────┘
                           │
                           ▼
┌──────────────────────────────────────────────────────────────┐
│           FROM STN TABLE RECORDED IN ASSOCIATION              │  S104
│    WITH PLAYITEM IDENTIFIER OF SELECTED PLAYITEM, ACQUIRE     │
│  (X2) VIDEO INFORMATION ABOUT ENHANCEMENT LAYER VIDEO DATA    │
│         (ENHANCEMENT LAYER (EL) VIDEO STREAM)                 │
└──────────────────────────────────────────────────────────────┘
                           │
                           ▼
┌──────────────────────────────────────────────────────────────┐
│                            USE                               │  S105
│  (X1) VIDEO INFORMATION ABOUT BDMV HDR VIDEO DATA (PRIMARY VIDEO STREAM) AND  │
│      (X2) VIDEO INFORMATION ABOUT ENHANCEMENT LAYER VIDEO DATA │
│              (ENHANCEMENT LAYER (EL) VIDEO STREAM)            │
│    ACQUIRED FROM STN TABLE TO CONDUCT VIDEO PLAYBACK AND OUTPUT │
└──────────────────────────────────────────────────────────────┘
                           │
                           ▼
                    ┌─────────────┐
                    │     END     │
                    └─────────────┘
```

F I G . 1 5

EP 3 285 260 B1

**REFERENCES CITED IN THE DESCRIPTION**

**Patent documents cited in the description**

- JP 2011023071 A
- WO 2012147350 A